(19) **Europäisches Patentamt**
**European Patent Office**
**Office européen des brevets**

(11) **EP 4 564 084 A1**

(12) **EUROPEAN PATENT APPLICATION**
published in accordance with Art. 153(4) EPC

(43) Date of publication:
**04.06.2025 Bulletin 2025/23**

(21) Application number: **22959252.2**

(22) Date of filing: **23.09.2022**

(51) International Patent Classification (IPC):
***G02F 1/13357*** *(2006.01)*      ***G02B 6/00*** *(2006.01)*

(52) Cooperative Patent Classification (CPC):
**G02B 6/0051; G02B 6/00; G02B 6/005;**
**G02B 6/0068; G02B 6/0076; G02B 6/0088;**
**G02F 1/1336**

(86) International application number:
**PCT/CN2022/121095**

(87) International publication number:
**WO 2024/060250 (28.03.2024 Gazette 2024/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Boe Technology Group Co., Ltd.**
**Beijing 100015 (CN)**
• **Fuzhou Boe Optoelectronics Technology Co.,**
**Ltd.**
**Fuzhou, Fujian 350300 (CN)**

(72) Inventors:
• **GUO, Zhijie**
**Beijing 100176 (CN)**
• **CHEN, Geng**
**Beijing 100176 (CN)**

• **DIAO, Kai**
**Beijing 100176 (CN)**
• **HU, Long**
**Beijing 100176 (CN)**
• **ZHANG, Han**
**Beijing 100176 (CN)**
• **CHEN, Ming**
**Beijing 100176 (CN)**
• **LIN, Yuhang**
**Beijing 100176 (CN)**
• **REN, Liangliang**
**Beijing 100176 (CN)**
• **CHEN, Zhiying**
**Beijing 100176 (CN)**

(74) Representative: **Hoffmann Eitle**
**Patent- und Rechtsanwälte PartmbB**
**Arabellastraße 30**
**81925 München (DE)**

(54) **BACKLIGHT MODULE AND DISPLAY DEVICE**

(57)     A backlight module, comprising a first light guide plate, a privacy film, a second light guide plate, a first light source and a second light source, wherein the first light guide plate is provided with a first light emergent surface and a first light incident surface intersecting with the first light emergent surface; the privacy film is located on one side of the first light emergent surface of the first light guide plate; the second light guide plate is located on the side of the privacy film facing away from the first light guide plate; the second light guide plate is provided with a second light emergent surface, which faces away from the privacy film, and a second light incident surface intersecting with the second light emergent surface; the first light source and the second light source are arranged in a direction perpendicular to a reference plane, and the first light source is opposite the first light incident surface; the second light source comprises a first portion, the first portion extending perpendicular to the reference plane; the side of the first light source close to the first light guide plate and the side of the second light source close to the second light guide plate are arranged in a staggered manner, and compared with the second light source, the side of the first light source close to the first light guide plate is closer to the center of the first light guide plate; and the reference plane is a plane where the first light emergent surface is located.

**EP 4 564 084 A1**

FIG. 3a

**Description**

TECHNICAL FIELD

The present disclosure relates to the field of display technologies, and in particular, to a backlight module and a display device.

BACKGROUND

In recent years, due to the popularity of notebook computers, mobile devices (mobile phones, tablet computers, and car navigation equipment), various outdoor automated teller machines (ATMs) and other products, people carry out a variety of business activities or personal information exchanges through these devices in their daily lives frequently. Therefore, it is very important to protect the privacy of these activities/ exchanges, and so there is a wide demand for liquid crystal display modules/devices with anti-peeping performance for these products.

SUMMARY

In an aspect, a backlight module is provided. The backlight module includes a first light guide plate, an anti-peeping film, a second light guide plate, a first light source, and a second light source. The first light guide plate has a first light exit surface and a first light incident surface intersecting the first light exit surface. The anti-peeping film is located on a side of the first light exit surface of the first light guide plate. The second light guide plate is located on a side of the anti-peeping film away from the first light guide plate, and the second light guide plate has a second light exit surface away from the anti-peeping film and a second light incident surface intersecting the second light exit surface, where the second light incident surface and the first light incident surface are located at a same side of the first light guide plate. The first light source and the second light source are arranged along a direction perpendicular to a reference plane, and the first light source is opposite the first light incident surface. The second light source includes a first portion. The first portion extends along the direction perpendicular to the reference plane and is opposite the second light incident surface. A side of the first light source proximate to the first light guide plate is staggered from a side of the second light source proximate to the second light guide plate, and the side of the first light source proximate to the first light guide plate is closer to a center of the first light guide plate than the second light source. The reference plane is a plane where the first light exit surface is located.
In some embodiments, the second light source includes a second portion connected to the first portion, the second portion of the second light source being opposite the first light incident surface; and the first light source is located between the first light incident surface and the second portion of the second light source.
In some embodiments, the backlight module further includes a light-shielding component. In the direction perpendicular to the reference plane, the light-shielding component is located between the first light source and the second light guide plate; and an orthographic projection of the light-shielding component on the reference plane covers an orthographic projection of at least a portion of the first light source on the reference plane.
In some embodiments, in a direction parallel to the reference plane, the light-shielding component extends to a space between the first light guide plate and the second light guide plate; and the second light incident surface extends beyond the first light incident surface.
In some embodiments, a partial boundary, away from the second light source, of a boundary of the orthographic projection of the light-shielding component on the reference plane, and a partial boundary, away from the second light source, of a boundary of an orthographic projection of the first light source on the reference plane have a distance therebetween, and the distance is greater than or equal to 3.5 mm.
In some embodiments, the backlight module further includes a light adjustment layer and a first light-shielding layer. The light adjustment layer is located between the anti-peeping film and the first light guide plate, and the light adjustment layer includes a third portion extending to a top of the first light source. The first light-shielding layer is located on a surface of the third portion of the light adjustment layer on a side, where the first light-shielding layer and the third portion of the light adjustment layer form the light-shielding component.
In some embodiments, the light adjustment layer includes: a diffusion sheet located between the anti-peeping film and the first light guide plate, and a prism layer located between the anti-peeping film and the diffusion sheet. A portion of the diffusion sheet extending to the top of the first light source forms the third portion, and the first light-shielding layer is located on a side of the diffusion sheet proximate to the first light guide plate.
In some embodiments, the third portion of the light adjustment layer and the second portion of the second light source have a gap therebetween.
In some embodiments, the first light source includes: a first light-emitting device and a first substrate arranged sequentially along a direction away from the first light incident surface, an extension direction of the first substrate being perpendicular or substantially perpendicular to the reference plane; and the first light exit surface is flush or substantially flush with a top of the first substrate, and the light-shielding component covers the first light-emitting device and a portion of the first substrate.

In some embodiments, the backlight module further includes a first adhesive layer provided between the first substrate and the second portion of the second light source, where the first light source is fixed on the second portion of the second light source through the first adhesive layer.

In some embodiments, the second light guide plate further has a second non-light incident surface intersecting the second light exit surface, and the second non-light incident surface and the second light incident surface surround the second light exit surface. The backlight module further includes: a back plate and a plastic frame. The back plate has an installation depression, and the first light guide plate, the anti-peeping film, the light adjustment layer, the second light guide plate, the first light source, and the second light source are located within the installation depression. The plastic frame is fastened to the back plate and includes a first bending edge, and the first bending edge is located at a top of the back plate. An orthographic projection of the first bending edge on the reference plane, covers an orthographic projection of an edge portion, corresponding to the first non-light incident surface, of the second light guide plate, an orthographic projection of an edge portion, corresponding to the first non-light incident surface, of the anti-peeping film, and an orthographic projection of an edge portion, corresponding to the first non-light incident surface, of the light adjustment layer.

In some embodiments, the backlight module further includes a fixing component connected to the light-shielding component, where the fixing component is located between the first light source and the second portion of the second light source.

In some embodiments, the orthographic projection of the light-shielding component on the reference plane covers an orthographic projection of the first light source on the reference plane; and the fixing component is connected to a side surface of the light-shielding component proximate to the second light source, and a cross-section pattern of the light-shielding component and the fixing component is L-shaped.

In some embodiments, the second light guide plate further has a second non-light incident surface and a bottom surface, where the first non-light incident surface intersects the second light exit surface, the bottom surface faces away from the second light exit surface, and the second non-light incident surface is perpendicular to the bottom surface; and the backlight module further includes: a second light-shielding layer covering the second non-light incident surface, and a third light-shielding layer covering a portion of the bottom surface proximate to the second non-light incident surface, the third light-shielding layer being connected to the second light-shielding layer.

In some embodiments, the second light guide plate further has a second non-light incident surface and a bottom surface, where the second non-light incident surface intersects the bottom surface, the bottom surface faces away from the second light exit surface, and the second non-light incident surface and the bottom surface have an included angle being an obtuse angle; and the backlight module further includes a fourth light-shielding layer covering the first non-light incident surface.

In some embodiments, the backlight module further includes a mid-frame, the mid-frame including a bottom frame. The bottom frame is located between the anti-peeping film and the second light guide plate, and is configured to carry the second light guide plate. The bottom frame includes a first bottom plate at a same side as the first light source, where the first bottom plate extends to a top of the first light source; and the first bottom plate on the reference plane covers the at least a portion of the first light source on the reference plane, and the first bottom plate forms the light-shielding component.

In some embodiments, a portion, used to carry the second light guide plate, of the first bottom plate is higher than a portion, located on the top of the first light source, of the first bottom plate; and a cross-section pattern of the first bottom plate is step-shaped.

In some embodiments, the first light source includes: a first light-emitting device and a first substrate arranged sequentially along a direction away from the first light incident surface, an extension direction of the first substrate being perpendicular or substantially perpendicular to the reference plane; and a top of the first substrate is higher than the first light exit surface; and a portion, located on the top of the first light source, of the first bottom plate is located on the top of the first substrate and contact with the first substrate.

In some embodiments, the backlight module further includes: a back plate, the back plate including a second bottom plate and multiple side plates fixed around the second bottom plate, where the second bottom plate and the multiple side plates define an installation depression, and the first light guide plate, the anti-peeping film, the first light source, and the second light source are located within the installation depression.

In some embodiments, the second light guide plate further has a second non-light incident surface intersecting the second light exit surface, the second non-light incident surface and the second light incident surface surround the second light exit surface; the bottom frame further includes a third bottom plate corresponding to the second non-light incident surface, the first bottom plate and the third bottom plate are connected and define an opening, and the opening exposes a portion of the anti-peeping film; the multiple side plates include a first side plate and a second side plate, the first side plate being opposite the first light incident surface; and the bottom frame is located on the second side plate, and the third bottom plate abuts against the second side plate.

In some embodiments, the mid-frame further includes a side frame located on the third bottom plate, the side frame being opposite the second non-light incident surface; and an orthographic projection of the second light guide plate on the reference plane is closer to an orthographic projection of the side frame on the reference plane than an orthographic projection of the first light guide plate on the reference plane.

In some embodiments, the second light guide plate further has a first non-light incident surface intersecting the second light exit surface, the first non-light incident surface and the second light incident surface surrounding the second light exit surface. The backlight module further includes a back plate and a plastic frame. The back plate has an installation depression, the first light guide plate, the anti-peeping film, the light adjustment layer, the first light source, and the second light source being located within the installation depression. The plastic frame is fastened to the back plate, and the plastic frame includes a first bending edge and a second bending edge. The first bending edge is located at a top of the back plate; an orthographic projection of the first bending edge on the reference plane covers an orthographic projection of a portion, proximate to the first non-light incident surface, of the second light guide plate on the reference plane; and a width of the first bending edge is $W_1$, 3 mm $\leq W_1 \leq$ 8 mm. The second bending edge is located at the top of the back plate; an orthographic projection of the second bending edge on the reference plane covers an orthographic projection of a portion, proximate to the second light incident surface, of the second light guide plate on the reference plane; and a width of the second bending edge is $W_2$, 10 mm $\leq W_2 \leq$ 17 mm; and the reference plane is the plane where the first light exit surface is located.

In some embodiments, the anti-peeping film includes: a first protective layer, a connection layer and a second protective layer that are sequentially stacked along the direction perpendicular to the reference plane, a plurality of first light-shielding strips located between the first protective layer and the connection layer, and a plurality of second light-shielding strips located between the connection layer and the second protective layer. The plurality of first light-shielding strips extend along a first direction. The plurality of second light-shielding strips extend along a second direction. The first direction and the second direction are both parallel to the reference plane; and the first direction is the same as the second direction, or the first direction intersects the second direction; and the reference plane is the plane where the first light exit surface is located.

In some embodiments, the first light-shielding strips and the second light-shielding strips each have a cross-section in a shape of a trapezoid.

In some embodiments, the first direction intersects the second direction; the anti-peeping film has anti-peeping directions being a third direction and a fourth direction, the third direction being opposite the fourth direction; and the first direction and the second direction both intersect the third direction; the connection layer includes: a third protective layer, a second adhesive layer and a fourth protective layer that are sequentially stacked along the direction perpendicular to the reference plane; an anti-peeping viewing angle of the anti-peeping film in the fourth direction satisfies a formula:

$$\gamma 1 = 90° - tan^{-1} \frac{2 * cos\, a * (2H + 2h + h1)}{2P + 2P1 * cos\, \alpha - W - w} ,$$

and
an anti-peeping viewing angle of the anti-peeping film in the third direction satisfies a formula:

$$\delta 1 = 90° - tan^{-1} \frac{2 * cos\, a * (2H + 2h + h1)}{2P + 2P2 * cos\, \alpha - W - w} ,$$

where $\gamma_1$ is the anti-peeping viewing angle of the anti-peeping film in the fourth direction; $\delta_1$ is the anti-peeping viewing angle of the anti-peeping film in the third direction; H is a height of the first light-shielding strip or of the second light-shielding strip; h is a thickness of the third protective layer or of the fourth protective layer; $h_1$ is a thickness of the second adhesive layer; $\alpha$ is a complementary angle of an included angle between the first direction and the third direction, and is a complementary angle of an included angle between the second direction and the third direction; P is a minimum distance between centers of cross-sections of two adjacent first light-shielding strips, or is a minimum distance between centers of cross-sections of two adjacent second light-shielding strips; W is a width of a lower base of the cross-section of the first light-shielding strip or of the cross-section of the second light-shielding strip; and w is a width of an upper base of the cross-section of the first light-shielding strip or of the cross-section of the second light-shielding strip; and $P_1$ and $P_2$ are both a distance between a center of the cross-section of the second light-shielding strip and a center of the cross-section of the first light-shielding strip adjacent along the third direction; and a sum of $P_1$ and $P_2$ is a distance, in the third direction, between the centers of the cross-sections of the two adjacent first light-shielding strips, and is a distance, in the fourth direction, between the centers of the cross-sections of the two adjacent second light-shielding strips.

In some embodiments, an included angle between the first direction and the second direction is greater than or equal to 15°.

In some embodiments, the first direction is the same as the second direction; and orthographic projections of the first light-shielding strips on the reference plane overlap orthographic projections of the second light-shielding strips on the reference plane; the connection layer includes: a third protective layer, a second adhesive layer and a fourth protective layer that are sequentially stacked along the direction perpendicular to the reference plane; an anti-peeping viewing angle of the anti-peeping film satisfies a formula:

$$\theta = 2 * \left( 90° - tan^{-1} \frac{4H + 4h + 2h1}{2P - W - w} \right),$$

where θ is the anti-peeping viewing angle; H is a height of the first light-shielding strip or of the second light-shielding strip; h is a thickness of the third protective layer or of the fourth protective layer; $h_1$ is a thickness of the second adhesive layer; P is a distance between centers of cross-sections of two adjacent first light-shielding strips, and is a distance between centers of cross-sections of two adjacent second light-shielding strips; W is a width of a lower base of the cross-section of the first light-shielding strip or of the cross-section of the second light-shielding strip; and w is a width of an upper base of the cross-section of the first light-shielding strip or of the cross-section of the second light-shielding strip.

In some embodiments, $7 \mu m \leq w \leq 12 \mu m$; and/or $13 \mu m \leq W \leq 19 \mu m$; and/or $60 \mu m \leq P \leq 70 \mu m$; and/or $135 \mu m \leq H \leq 155 \mu m$; and/or $170 \mu m \leq h \leq 190 \mu m$.

In some embodiments, the connection layer has haze; and/or the second protective layer has haze; and/or the backlight module further includes a polarizer provided on the second light exit surface of the second light guide plate, the polarizer having haze.

In some embodiments, the first light guide plate includes a plurality of strip-shaped protruding structures located on the first light exit surface, the plurality of strip-shaped protruding structures extending along a direction perpendicular to the first light incident surface.

In some embodiments, a thickness of the first light guide plate is $h_2$, a thickness of the second light guide plate is $h_3$, and $h_2$ and $h_3$ satisfy:

$$0.5 < \frac{h3}{h2} < 1.$$

In some embodiments, the backlight module further includes: a back plate having an installation depression, the first light guide plate, the anti-peeping film, the light adjustment layer, the first light source, and the second light source being located within the installation depression. The back plate has a first through hole and a second through hole. The backlight module further includes a first power supply line and a second power supply line. The first power supply line passes through the first through hole and is electrically connected to the first light source; and the second power supply line passes through the second through hole and is electrically connected to the second light source.

In another aspect, a display device is provided. The display device includes the backlight module described in any of the above embodiments, and a display panel located on a side, away from the first light guide plate, of the second light guide plate in the backlight module.

BRIEF DESCRIPTION OF THE DRAWINGS

In order to describe technical solutions in the present disclosure more clearly, the accompanying drawings to be used in some embodiments of the present disclosure will be introduced briefly; obviously, the accompanying drawings to be described below are merely drawings of some embodiments of the present disclosure, and a person of ordinary skill in the art can obtain other drawings according to those drawings. **In** addition, the accompanying drawings to be described below may be regarded as schematic diagrams, and are not limitations on actual sizes of products involved in the embodiments of the present disclosure.

FIG. 1 is a diagram showing a structure of a display device, in accordance with some embodiments of the present disclosure;
FIG. 2 is a diagram showing a structure of another display device, in accordance with some embodiments of the present disclosure;
FIG. 3a is a diagram showing a structure of a backlight module, in accordance with some embodiments of the present disclosure;

FIG. 3b is a diagram showing a structure of the region N in the backlight module shown in FIG. 3a;

FIG. 4a is a diagram showing structures of a first light guide plate and a first light source, in accordance with some embodiments of the present disclosure;

FIG. 4b is a sectional view taken along the DD line of the first light guide plate shown in FIG. 4a;

FIG. 5 is a diagram showing structures of a first light source and a second light source, in accordance with some embodiments of the present disclosure;

FIG. 6 is a diagram showing a structure of another backlight module, in accordance with some embodiments of the present disclosure;

FIG. 7a is a diagram showing a structure of yet another backlight module, in accordance with some embodiments of the present disclosure;

FIG. 7b is a diagram showing a partial structure of a second light guide plate, in accordance with some embodiments of the present disclosure;

FIG. 8a is a diagram showing a structure of still another backlight module, in accordance with some embodiments of the present disclosure;

FIG. 8b is a diagram showing a partial structure of another second light guide plate, in accordance with some embodiments of the present disclosure;

FIG. 9 is a diagram showing a structure of still yet another backlight module, in accordance with some embodiments of the present disclosure;

FIG. 10 is a diagram showing a structure of yet another display device, in accordance with some embodiments of the present disclosure;

FIG. 11a is a diagram showing structures of a mid-frame and a back plate, in accordance with some embodiments of the present disclosure;

FIG. 11b is a diagram showing partial structures of a mid-frame and a back plate, in accordance with some embodiments of the present disclosure;

FIG. 11c is another diagram showing partial structures of a mid-frame and a back plate, in accordance with some embodiments of the present disclosure;

FIG. 11d is yet another diagram showing partial structures of a mid-frame and a back plate, in accordance with some embodiments of the present disclosure;

FIG. 11e is still another diagram showing partial structures of a mid-frame and a back plate, in accordance with some embodiments of the present disclosure;

FIG. 11f is still yet another diagram showing partial structures of a mid-frame and a back plate, in accordance with some embodiments of the present disclosure;

FIG. 11g is still yet another diagram showing partial structures of a mid-frame and a back plate, in accordance with some embodiments of the present disclosure;

FIG. 12a is a top view of an anti-peeping film in one implementation;

FIG. 12b is a sectional view taken along the FF line of the anti-peeping film shown in FIG. 12a;

FIG. 13a is a top view of an anti-peeping film, in accordance with some embodiments of the present disclosure;

FIG. 13b is a sectional view taken along the GG line of the anti-peeping film shown in FIG. 13a;

FIG. 13c is another sectional view taken along the GG line of the anti-peeping film shown in FIG. 13a;

FIG. 14a is another top view of an anti-peeping film, in accordance with some embodiments of the present disclosure;

FIG. 14b is a diagram showing structures of a first light-shielding strip and a second light-shielding strip in the anti-peeping film shown in FIG. 14a;

FIG. 14c is a diagram showing dimensional variation of the light-shielding strip in the anti-peeping film shown in FIG. 14a;

FIG. 15 is a sectional view taken along the HH line of the anti-peeping film shown in FIG. 14a;

FIG. 16 is another sectional view taken along the HH line of the anti-peeping film shown in FIG. 14a;

FIG. 17a is yet another sectional view taken along the HH line of the anti-peeping film shown in FIG. 14a;

FIG. 17b is still another sectional view taken along the HH line of the anti-peeping film shown in FIG. 14a;

FIG. 18 is a curve graph showing ranges of anti-peeping viewing angles of the anti-peeping film shown in FIG. 14a;

FIG. 19 is a diagram showing a simulation interface by a simulation software, in accordance with some embodiments of the present disclosure; and

FIG. 20 is a diagram showing simulation results from a simulation software, in accordance with some embodiments of the present disclosure.

## DETAILED DESCRIPTION

The technical solutions in some embodiments of the present disclosure will be described clearly and completely with reference to the accompanying drawings; obviously, the described embodiments are merely some but not all embodiments of the present disclosure. All other embodiments obtained by a person of ordinary skill in the art based on embodiments of the present disclosure shall be included in the protection scope of the present disclosure.

Unless the context requires otherwise, throughout the specification and the claims, the term "comprise" and other forms thereof such as the third-person singular form "comprises" and the present participle form "comprising" are construed as an open and inclusive meaning, i.e., "including, but not limited to." In the description of the specification, the terms such as "one embodiment," "some embodiments," "exemplary embodiments," "example," "specific example," or "some examples" are intended to indicate that specific features, structures, materials, or characteristics related to the embodiment(s) or example(s) are included in at least one embodiment or example of the present disclosure. Schematic representations of the above terms do not necessarily refer to the same embodiment(s) or example(s). In addition, the specific features, structures, materials, or characteristics may be included in any one or more embodiments or examples in any suitable manner.

The terms "first" and "second" are used for descriptive purposes only, and are not to be construed as indicating or implying a relative importance or implicitly indicating the quantity of indicated technical features. Thus, features defined by "first" or "second" may explicitly or implicitly include one or more of the features. In the description of the embodiments of the present disclosure, the term "a plurality of" or "multiple" means two or more unless otherwise specified.

Some embodiments may be described using the term "connected" and its derivatives. For example, the term "connected" may be used in the description of some embodiments to indicate that two or more components are in direct physical or electrical contact with each other. The embodiments disclosed herein are not necessarily limited to the content herein.

The phrase "at least one of A, B, and C" has the same meaning as the phrase "at least one of A, B, or C", both including the following combinations of A, B, and C: only A, only B, only C, a combination of A and B, a combination of A and C, a combination of B and C, and a combination of A, B, and C.

The phrase "A and/or B" includes the following three combinations: only A, only B, and a combination of A and B.

The use of the phrase "applicable to" or "configured to" herein means an open and inclusive expression, which does not exclude devices that are applicable to or configured to perform additional tasks or steps.

In addition, the use of the phrase "based on" or "according to" is meant to be open and inclusive, since a process, step, calculation, or other action that is "based on" or "according to" one or more of the stated conditions or values may, in practice, be based on or according to additional conditions or values exceeding those stated.

It will be understood that when a layer or element is referred to as being on another layer or substrate, the layer or element may be directly on the another layer or substrate, or there may be intermediate layer(s) between the layer or element and the another layer or substrate.

Exemplary embodiments are described herein with reference to sectional views and/or plan views that are schematic illustrations of idealized embodiments. In the accompanying drawings, thicknesses of layers and areas of regions are enlarged for clarity. Thus, variations in shape with respect to the accompanying drawings due to, for example, manufacturing technologies and/or tolerances may be envisaged. Therefore, the exemplary embodiments should not be construed as being limited to the shapes of the regions shown herein, but including shape deviations due to, for example, manufacturing. For example, an etched region shown to have a rectangular shape generally has a curved feature. Therefore, the regions shown in the accompanying drawings are schematic in nature, and their shapes are not intended to show actual shapes of the regions in a device, and are not intended to limit the scope of the exemplary embodiments.

Some embodiments of the present disclosure provide a backlight module 100 and a display device 1000. The backlight module 100 and the display device 1000 are described below in connection with the accompanying drawings, respectively.

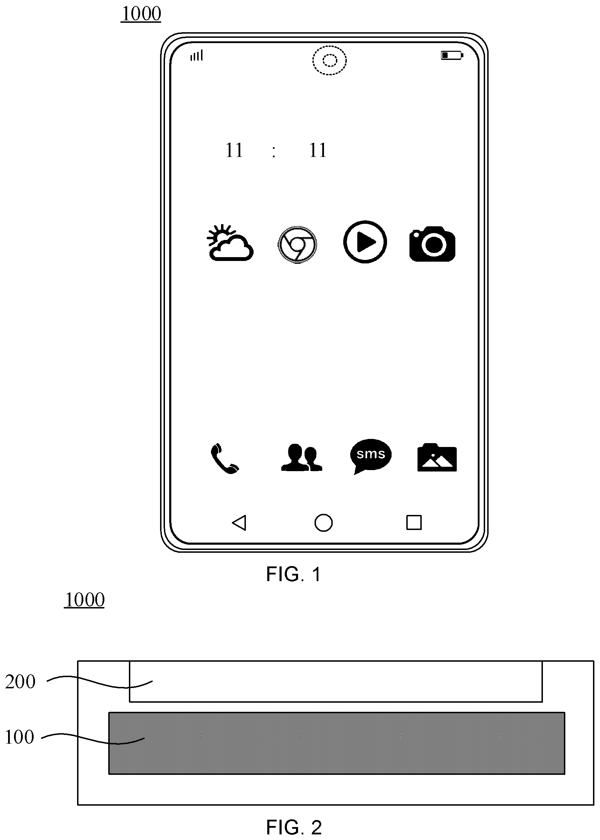

As shown in FIG. 1, some embodiments of the present disclosure provide a display device 1000. The display device 1000 may be any device capable of displaying images whether in motion (e.g., a video) or stationary (e.g., a still image), and regardless of text or image. More specifically, it is expected that these embodiments may be implemented in or associated with a variety of electronic devices. The variety of electronic devices may include (but is not limited to), for example, mobile telephones, wireless devices, personal data assistants (PDA), hand-held or portable computers, GPS receivers/navigators, cameras, MP4 video players, video cameras, game consoles, TV monitors, flat panel displays, computer monitors, car displays (such as odometer displays), navigators, and cockpit controllers and/or displays.

In some examples, as shown in FIG. 2, the display device 1000 includes a housing, and a backlight module 100, a display panel 200, a circuit board, a data drive integrated circuit (IC), and other electronic accessories, which are provided within the housing.

Exemplarily, the housing has a certain strength and can provide protection for these components provided therein. For example, the material of the housing includes plastic.

The display panel 200 is a liquid crystal display (LCD), which is of a non-active light-emitting type. The display panel 200 may be, for example, a twisted nematic (TN) display panel, an in-plane switching (IPS) display panel, or an advanced super dimension switch (ADSDS) display panel, which may be selected and set according to actual requirements, and the present disclosure does not limit this.

It will be noted that the display panel 200 is located on a light exit side of the backlight module 100 (for example, the light exit side refers to a side, away from the first light guide plate 1, of the second light guide plate 3 described below); and the display panel 200 does not emit light itself, the brightness of light in backlight provided by the backlight module 100 after passing through the display panel 200 is utilized to achieve the purpose of display.

Exemplarily, the display panel 200 includes a plurality of pixels, each pixel including a red sub-pixel, a green sub-pixel, and a blue sub-pixel. The backlight (e.g., white light) provided by the backlight module 100 changes to red light after passing through the red sub-pixel, to green light after passing through the green sub-pixel, and to blue light after passing through the blue sub-pixel. Three colors of light, i.e., red, green, and blue, having different amounts of transmission can synthesize a variety of colors of light, thereby determining the color displayed by the pixel. The plurality of pixels in the display panel 200 cooperate with each other so as to realize the display function of the display device 1000.

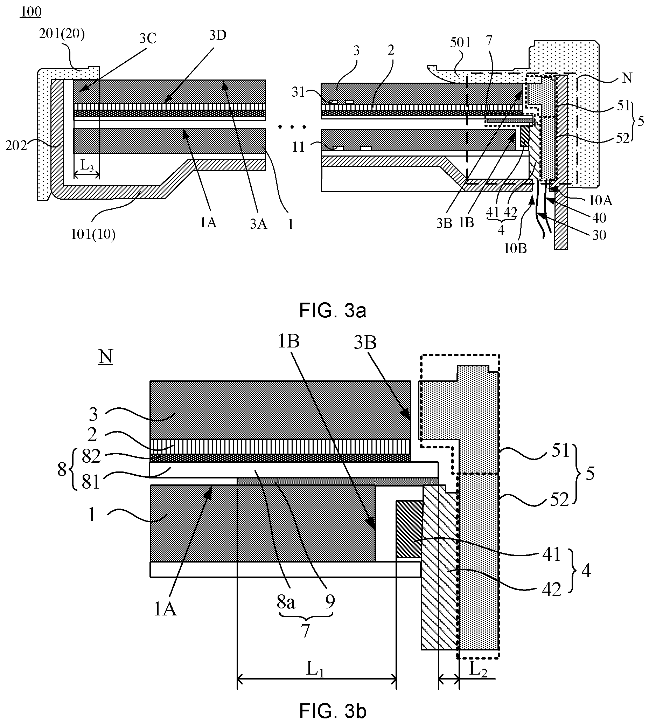

As shown in FIGS. 3a and 3b, in some examples, the backlight module 100 includes a first light guide plate 1, an anti-peeping film 2, a second light guide plate 3, a first light source 4, and a second light source 5.

In some examples, the first light guide plate 1 has a first light exit surface 1A and a first light incident surface 1B intersecting the first light exit surface 1A.

Exemplarily, light may enter from the first light incident surface 1B of the first light guide plate 1 and exit from the first light exit surface 1A intersecting with the first light incident surface 1B, and ultimately directed to the display panel 200, so as to provide backlight for the display panel 200, and to realize the display function of the display device 1000.

Exemplarily, a side surface of the first light guide plate 1 forms the first light incident surface 1B, and the first light incident surface 1B intersects the first light exit surface 1A. It can be understood that the first light guide plate 1 in the present disclosure is an edge-type backlight module.

Exemplarily, the first light incident surface 1B may be singular in quantity; alternatively, the first light incident surface 1B may be plural in quantity. For example, the quantity of first light incident surfaces 1B is two; and the two first light incident surfaces 1B may be provided opposite to each other, or may be provided adjacent and connected to each other. As another example, the quantity of first light incident surfaces 1B is three, and the three first light incident surfaces 1B may be connected in sequence.

In the present disclosure, a plane where the first light exit surface 1A of the first light guide plate 1 is located is defined as a reference plane M in the following embodiments for the convenience of description.

In some examples, the first light source 4 and the second light source 5 are arranged in a direction perpendicular to the reference plane M, and the first light source 4 is opposite the first light incident surface 1B.

Exemplarily, the first light source 4 is a point light source or a linear light source, and the first light guide plate 1 is used to convert the first light source 4 located on a side of the first light incident surface 1B into a surface light source.

It can be understood that the first light source 4 has the same quantity as the first light incident surface 1B of the first light guide plate 1, and the first light source 4 and the first light incident surface 1B are provided opposite to each other, so that the light emitted from the first light source 4 enters the first light guide plate 1 from the first light incident surface 1B, which may reduce the loss of the light emitted from the first light source 4, and improve the luminous efficiency.

For example, after the light emitted from the first light source 4 is directed into the first light guide plate 1 from the first light incident surface 1B, a portion of the light undergoes total reflection between the first light exit surface 1A and a back surface of the first light guide plate 1. As shown in FIG. 3a, a plurality of first mesh dots 11 (only two of which are shown in FIG. 3a) are provided on the back surface of the first light guide plate 1, and these first mesh dots 11 can disrupt the total reflection condition of the light, so that the light incident to the first mesh dots 11 is diffusely reflected and can be emitted from an arbitrary position on the first light exit surface 1A, and a travel direction of the emitted light is at an arbitrary angle with the plane where the first light exit surface 1A is located.

Specifically, the plurality of first mesh dots 11 of the first light guide plate 1 are, for example, printed mesh dots or non-printed mesh dots.

Exemplarily, the plurality of first mesh dots 11 of the light guide plate 1 are printed mesh dots by printing on the back surface of the first light guide plate 1 after the first light guide plate 1 has completed the shape processing. Further, the plurality of first mesh dots 11 printed on the back surface of the first light guide plate 1 are printed using ink. Still further, for example, hot-drying ink printing or ultraviolet (UV) curable ink printing is employed.

Exemplarily, the plurality of first mesh dots 11 of the first light guide plate 1 are non-printed mesh dots directly formed on the back surface of the first light guide plate 1 during a shaping of the first light guide plate 1. Further, for example, the plurality of first mesh dots 11 are formed directly on the back surface of the first light guide plate 1 during the shape processing of the first light guide plate 1 by using a hot press method, a chemical etching method, a precision mechanical cutting method, an optical lithography (Stamper) method, or an internal diffusion method. It will be noted that the quantity and density of the first mesh dots are not limited in the present disclosure. For example, it may be set such that the density of mesh dots at a position proximate to a light source is less than or equal to the density of mesh dots at a position away from the light source.

In some examples, as shown in FIGS. 3a and 3b, the anti-peeping film 2 is located on a side of the first light exit surface 1A of the first light guide plate 1.

Exemplarily, the anti-peeping film 2 is used to reduce a range of an included angle between a travel direction of light passing through the anti-peeping film 2 and a plane where the anti-peeping film 2 is located.

Exemplarily, after the light emitted from the first light exit surface 1A of the first light guide plate 1 enters the anti-peeping film 2, the anti-peeping film 2 can block light whose incident direction is at an included angle less than a certain angle with the plane where the anti-peeping film 2 is located, and cause light whose incident direction is at an included angle greater than the certain angle with the plane where the anti-peeping film 2 is located to exit. For example, the anti-peeping film 2 can block light whose incident direction is at an included angle less than 60° with the plane where the anti-peeping film 2 is located, and cause light whose incident direction is at an included angle greater than 60° with the plane where the anti-peeping film 2 is located to exit.

By providing the anti-peeping film 2 opposite the first light exit surface 1A, the anti-peeping film 2 can be used to filter the light emitted from the first light exit surface 1A, so that only such light can pass through the anti-peeping film 2, whose incident direction is at an included angle greater than the certain angle with the plane where the anti-peeping film 2 is located, which facilitates the formation of collimated light by the light passing through the anti-peeping film 2.

In some examples, as shown in FIGS. 3a and 3b, the second light guide plate 3 is located on a side of the anti-peeping film 2 away from the first light guide plate 1. The second light guide plate 3 has a second light exit surface 3A away from the anti-peeping film 2, and a second light incident surface 3B intersecting the second light exit surface 3A. The second light incident surface 3B and the first light incident surface 1B are located at a same side of the first light guide plate 1.

Exemplarily, light can enter from the second light incident surface 3B of the second light guide plate 3 and exit from the second light exit surface 3A intersecting with the second light incident surface 3B, and is ultimately directed to the display panel 200, so as to provide backlight for the display panel 200, realizing the display function of the display device 1000.

Exemplarily, a side surface of the second light guide plate 3 forms the second light incident surface 3B, and the second light incident surface 3B intersects the second light exit surface 3A. It can be understood that the second light guide plate 3 in the present disclosure is an edge-type backlight module.

Exemplarily, the second light incident surface 3B may be singular in quantity; alternatively, the second light incident surface 3B may be plural in quantity. For example, the quantity of second light incident surfaces 3B is two; and the two second light incident surfaces 3B may be provided opposite to each other, or may be provided adjacent and connected to each other. As another example, the quantity of second light incident surfaces 3B is three, and the three second light incident surfaces 1B may be connected in sequence.

Exemplarily, the second light source 5 is a point light source or a linear light source, and the second light guide plate 3 is used to convert the second light source 5 located on a side of the second light incident surface 3B into a surface light source.

It can be understood that the second light source 5 has the same quantity as the second light incident surface 3B of the second light guide plate 3, and the second light source 5 and the second light incident surface 3B are provided opposite to each other, so that the light emitted from the second light source 5 enters the second light guide plate 3 from the second light incident surface 3B.

For example, after the light emitted from the second light source 5 is directed into the second light guide plate 3 from the second light incident surface 3B, a portion of the light undergoes total reflection between the second light exit surface 3A and a back surface of the second light guide plate 3. As shown in FIG. 3a, a plurality of second mesh dots 31 (only two of which are shown in FIG. 3a) are provided on the back surface of the second light guide plate 3, and these second mesh dots 31 can disrupt the total reflection condition of the light, so that the light incident to the second mesh dots 31 is diffusely reflected and is emitted from an arbitrary position on the second light exit surface 3A, and a travel direction of the emitted light is at an arbitrary angle with the plane where the second light exit surface 3A is located.

Specifically, the plurality of second mesh dots 31 of the second light guide plate 3 are, for example, printed mesh dots or non-printed mesh dots.

Exemplarily, the plurality of second mesh dots 31 of the light guide plate 1 are printed mesh dots by printing on the back surface of the second light guide plate 3 after the second light guide plate 3 has completed the shape processing. Further, the plurality of second mesh dots 31 printed on the back surface of the second light guide plate 3 are printed using ink. Still further, for example, hot-drying ink printing or ultraviolet (UV) curable ink printing is employed.

Exemplarily, the plurality of second mesh dots 31 of the second light guide plate 3 are non-printed mesh dots directly formed on the back surface of the second light guide plate 3 during a shaping of the first light guide plate 3. Further, for example, the plurality of second mesh dots 31 are formed directly on the back surface of the second light guide plate 3 during the shape processing of the second light guide plate 3 by using a hot press method, a chemical etching method, a precision mechanical cutting method, an optical lithography (Stamper) method, or an internal diffusion method.

It can be understood that the second light exit surface 3A of the second light guide plate 3 is provided away from the anti-peeping film 2, so that an exit direction of the light from the second light guide plate 3 is the same as an exit direction of the light from the first light guide plate 1. Therefore, the light incident from the first light source 4 to the interior of the first light guide plate 1 and emitted from the first light exit surface 1A can pass through the anti-peeping film 2 and enter the second light guide plate 3, then be emitted via the second light exit surface 3A, and be directed to the display panel 200 together with the light incident from the second light source 5 to the interior of the second light guide plate 3 and emitted from the second light exit surface 3A.

In some examples, the maximum dimension of the second mesh dot 31 in a plane where the display device 1000 is located is less than the maximum dimension of the first mesh dot 11 in the plane where the display device 1000 is located.

It can be noted that in a case where the mesh dot is in the shape of a circle, the maximum dimension is the diameter of the circle; and in a case where the mesh dot is in the shape of a rectangle, the maximum dimension is the length of the diagonal of the rectangle.

Exemplarily, the maximum dimension of the second mesh dot 31 in the plane where the display device 1000 is located is less than or equal to 40 $\mu$m. For example, the maximum dimension may be 20 $\mu$m, 25 $\mu$m, 30 $\mu$m, 35 $\mu$m, or 40 $\mu$m.

Exemplarily, the maximum dimension of the second mesh dot 31 in the plane where the display device 1000 is located is less than or equal to 80 $\mu$m. For example, the maximum dimension may be 25 $\mu$m, 40 $\mu$m, 50 $\mu$m, 60 $\mu$m, or 80 $\mu$m.

Exemplarily, in combination with FIGS. 2 and 3a, the second light guide plate 3 is provided proximate to the display panel 200. By setting the maximum dimension of the second mesh dot 31 in the plane where the display device 1000 is located to be relatively small, the second mesh dot 31 of the second light guide plate 3 may be avoided from being seen by people through the display panel 200, and thus the display effect of the display device 1000 will be not affected.

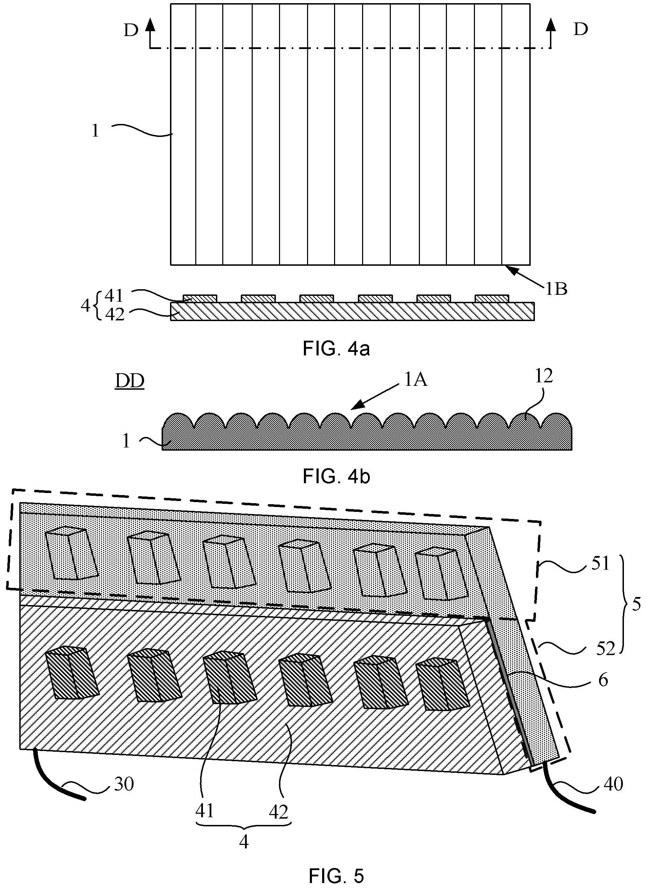

In some examples, as shown in FIGS. 4a and 4b, where FIG. 4a is a top view of the first light source 4 and the first light guide plate 1, and FIG. 4b is a sectional view taken along the AA line in FIG. 4a, the first light guide plate 1 includes a plurality of strip-shaped protruding structures 12 located on the first light exit surface 1A, and the plurality of strip-shaped protruding structures 12 extend along a direction perpendicular to the first light incident surface 1B.

By providing the strip-shaped protruding structures 12, it is possible to change a propagation direction of light passing through the strip-shaped protruding structures 12, to narrow an emitting range of light emitted from the first light exit surface 1A of the first light guide plate 1, and to increase an included angle between the light and the plane where the anti-peeping film 2 is located, so as to enable more light to pass through the anti-peeping film 2, thereby increasing the luminous efficiency of the backlight module 100.

It will be noted that the second light exit surface 3A of the second light guide plate 3 is a flat plane, so as to avoid the influence of the second light guide plate 3 on the collimated light emitted from the anti-peeping film 2.

In some examples, a thickness of the first light guide plate 1 is $h_2$, and a thickness of the second light guide plate 3 is $h_3$, where $h_2$ and $h_3$ satisfy:

$$0.5 < \frac{h3}{h2} < 1$$

.

Exemplarily, a value of $\dfrac{h3}{h2}$ may be 0.55, 0.6, 0.7, 0.8, 0.95, or the like.

Exemplarily, the thickness $h_3$ of the second light guide plate 3 may be 1.5 mm, and the thickness $h_2$ of the first light guide plate 1 may be 2 mm.

By the above-described setting, the influence of the second light guide plate 3 on the collimated light emitted from the anti-peeping film 2 can be avoided.

As described above, the first light source 4 is used to provide light to the first light incident surface 1B of the first light guide plate 1, and the second light source 5 is used to provide light to the second light incident surface 3B of the second light guide plate 3. By setting the second light incident surface 3B and the first light incident surface 1B at the same side of the first light guide plate 1, it is possible to arrange the first light source 4 and the second light source 5 in the backlight module 100 at the same side of the first light guide plate 1, which is conducive to simplifying the design of the first light source 4 and the second light source 5 in the backlight module 100. Moreover, by setting the first light source 4 and the second light source 5 at the same side of the first light guide plate 1, the first light source 4 and the second light source 5 may also be arranged more compactly, reducing the space occupied by the first light source 4 and the second light source 5, and reducing the size of the backlight module 100, which is conducive to miniaturized design and narrow frame design of the display device 1000.

Exemplarily, since the second light incident surface 3B and the first light incident surface 1B are provided at the same side, the second light incident surface 3B is the same as the first light incident surface 1B in terms of quantity. For example, the quantity of the second light incident surfaces 3B is two, and the quantity of the first light incident surfaces 1B is also two. Accordingly, the quantity of second light sources 5 opposite the two second light incident surfaces 3B is two, and the quantity of first light sources 4 opposite the two first light incident surfaces 1B is two.

In some examples, as shown in FIGS. 3a and 3b, an extension direction of the first light source 4 is perpendicular or substantially perpendicular to the reference plane M. The first light source 4 includes: a first light-emitting device 41 and a first substrate 42 arranged sequentially along a direction away from the first light incident surface 1B, in which the first light-emitting device 41 is provided opposite the first light incident surface 1B, and an extension direction of the first substrate 42 is perpendicular or substantially perpendicular to the reference plane M.

In some examples, the second light source 5 includes a first portion 51. The first portion 51 extends along the direction perpendicular to the reference plane M, and is opposite the second light incident surface 3B.

The second light source 5 includes: a second light-emitting device and a second substrate arranged sequentially along a direction away from the second light incident surface 3B, in which the second light-emitting device is provided opposite the second light incident surface, and an extension direction of the second substrate is perpendicular or substantially perpendicular to the reference plane M.

Exemplarily, as shown in FIG. 3a, the first light source 4 and the second light source 5 have the same extension direction.

Exemplarily, either of the first light-emitting device 41 and the second light-emitting device may be a fluorescent tube or a light-emitting diode.

For example, the first light-emitting device 41 and the second light-emitting device are both fluorescent tubes; alternatively, as shown in FIG. 5, the first light-emitting device 41 and the second light-emitting device are both light-emitting diodes; alternatively, of the first light-emitting device 41 and the second light-emitting device, one is a light-emitting diode and the other is a fluorescent tube. The present disclosure is not limited in this regard.

It can be understood that, in a case where the first light-emitting device 41 and the second light-emitting device are both light-emitting diodes, the first light-emitting device 41 is plural in quantity, the plurality of first light-emitting devices 41 being sequentially arranged along an extension direction of the first light incident surface 1B of the first light guide plate 1, and the second light-emitting device is plural in quantity, the plurality of second light-emitting devices being sequentially arranged along an extension direction of the second light incident surface 3B of the first light guide plate 3.

Exemplarily, the first substrate 42 of the first light source 4 is used to provide support and power supply for the first light-emitting device 41. The first substrate 42 may include a base, and a trace that is provided on the base and provides an electrical signal to the first light-emitting device 41. Optionally, the first substrate 42 may be a printed circuit board (PCB) or a flexible printed circuit board (FPC).

Exemplarily, the second substrate of the second light source 5 is used to provide support and power supply for the second light-emitting device. The second substrate may include a base, and a trace that is provided on the base and provides an electrical signal to the second light-emitting device. Optionally, the second substrate may be a printed circuit board (PCB) or a flexible printed circuit board (FPC). The following of the present disclosure illustrates first and second portions 51 and 52 of the second light source 5, which include a structure of the second substrate.

Optionally, the first substrate 42 of the first light source 4 and the second substrate of the second light source 5 in the present disclosure may each be electrically connected to an external circuit via a connector structure to realize power supply to the circuit board.

By arranging the first portion 51 of the second light source 5 opposite the second light incident surface 3B, a large proportion of the light emitted from the second light-emitting device of the second light source 5 can be made to enter the second light guide plate 3 to provide backlight, so that the loss of light from the second light source 5 may be reduced, improving the luminous efficiency.

It will be noted that the display function of the display device 1000 in the embodiments of the present disclosure is related to a light-emitting state of the first light source 4 and a light-emitting state of the second light source 5, and the different light-emitting states of the first light source 4 and the second light source 5 can enable the display device 1000 to realize different display functions.

For example, in a case where only the first light source 4 emits light, the light emitted from the first light source 4, after being incident to the interior of the first light guide plate 1, is emitted from the first light exit surface 1A, and the emitted light is incident to the anti-peeping film 2, so as to reduce the range of the included angle between the travel direction of the light passing through the anti-peeping film 2 and the plane where the anti-peeping film 2 is located. The above light, after passing through the anti-peeping film 2, is directed to the display panel 200 through the second light guide plate 3 to provide a backlight for the display panel 200, thereby realizing the display function of the display device 1000. Understandably, in the case where only the first light source 4 emits light, the light provided by the backlight module 100 emits light at an angle with a relatively small range, the light forms collimated light, so the user can only see the display screen of the display device 1000 in a relatively small range of viewing angles, thereby realizing a narrow viewing angle display of the display device 1000, and thus realizing an anti-peeping display of the display device 1000.

For example, in the case where both the first light source 4 and the second light source 5 emit light, the light emitted from the second light source 5 passes through the second light guide plate 3 and then is converted into divergent light emitted in a direction facing the display panel 200, and the divergent light is directed to the display panel 200 and provides a backlight for the display panel 200. Because a range of an included angle between a travel direction of the divergent light and a plane where the backlight module 100 is located is relatively large, it is possible to enable the user to see the display content of the display device 1000 over a relatively large range of viewing angles, so that a wide viewing angle display of the display device 1000 may be realized, i.e., a shared display function of the display device 1000 may be realized. Moreover, the light emitted from the first light source 4 can be incident to the display panel 200 after passing through the first light guide plate 1, the anti-peeping film 2, and the second light guide plate 3 in turn, to provide backlight for the display panel 200, so that the display brightness of the display device 1000 may be increased while the display device 1000 performs the wide-viewing angle display, and the display effect may be improved.

In some examples, as shown in FIG. 3a, a side of the first light source 4 proximate to the first light guide plate 1 is staggered from a side of the second light source 5 proximate to the second light guide plate 3, and the side of the first light source 4 proximate to the first light guide plate 1 is closer to the center of the first light guide plate 1 than the second light source 5.

With this arrangement, the first light source 4 and the second light source 5 can be arranged in a staggered manner, which may reduce the amount of light emitted by the first light source 4 that directly enters the second light guide plate 3 from the cavity of the backlight module 100, thereby reducing the interference of the first light source 4 with the display screen in the anti-peeping state.

Therefore, by arranging the first light source 4, the first light guide plate 1, and the anti-peeping film 2, the backlight module 100 provided by some embodiments of the present disclosure can allow the light emitted by the first light source 4 to pass through the first light guide plate 1 and the anti-peeping film 2 and then converted into light emitted at an angle with a relatively small range, that is, collimated light is formed. In a case where the collimated light passes through the second light guide plate 3 and is emitted to the display panel 200 to provide the backlight for the display panel 200, the display device 1000 can be enabled to achieve narrow viewing angle display, i.e., achieve the anti-peeping display function of the display device 1000. By arranging the second light source 5 and the second light guide plate 3, the light emitted by the second light source 5 is converted into divergent light after passing through the second light guide plate 3. In a case where the divergent light with a relatively large emission angle range is emitted to the display panel 200 to provide the backlight for the display panel 200, the range of the included angle between the travel direction of the divergent light and the plane where the backlight module 100 is located is relatively large, which enables wide viewing angle display of the display device 1000, i.e., enables the shared display function of the display device 1000. Accordingly, by individually controlling the light emission of the first light source 4 and the second light source 5, the display device 1000 can be switched between the anti-peeping display function and the shared display function. By arranging the first light source 4 and the second light source 5 in the staggered manner, the amount of light emitted by the first light source 4 that directly enters the second light guide plate 3 from the cavity of the backlight module 100 may be reduced, reducing the interference of the first light source 4 with the display screen in the anti-peeping state.

In some examples, as shown in FIG. 3a, the second light source 5 includes a second portion 52 connected to the first portion 51, and the second portion 52 of the second light source 2 is opposite the first light incident surface 1B. The first light source 4 is located between the first light incident surface 1B and the second portion 52 of the second light source 5.

Exemplarily, the first portion 51 of the second light source 5 includes a second light-emitting device and a portion of a second substrate, and the second portion 52 of the second light source 5 is the other portion of the second substrate. That is to say, the first substrate and the second substrate are stacked sequentially in a direction away from the first light incident surface, and along the direction perpendicular to the reference plane, the height of the first substrate is less than the height of the second substrate, and the top of the second substrate extends out of the top of the first substrate, forming a step structure.

By arranging the second portion 52 of the second light source 5 opposite the first light incident surface 1B, the first light source 4 which is opposite the first light incident surface 1B can be fixed on the second portion 52 of the second light source 5, In this way, the second portion 52 can provide support for the first light source 4, and it is also possible to make the first light source 4 and the second light source 5 more compact, reducing the space occupation ratio of the first light source 4 and the second light source 5 in the plane where the backlight module 100 is located, which is conducive to reducing the frame size of the backlight module 100.

Furthermore, by arranging the first light source 4 between the first light incident surface 1B and the second portion 52 of the second light source 5, it is possible to avoid crosstalk between an electrical signal in the first light source 4 and an electrical signal in the second light source 5, thereby avoiding, when one light source emits light, the occurrence of abnormal light emission of the other light source due to crosstalk. Accordingly, the above-mentioned crosstalk can be prevented from affecting the display function of the display device 1000.

In the present disclosure, the first substrate 42 is provided on the second substrate, so that the side of the first light source 4 facing the first light guide plate 1 is staggered from the side of the second light source 5 facing the second light guide plate 3; and the second portion 52 can also block the light emitted by the first light source 4 to avoid display light leakage and improve the display quality. It should be noted that, optionally, a raising structure may also be provided at a position corresponding to the second portion 52. The raising structure has no electrical connection with the first portion 51.

In this case, the raising structure can also realize the staggered arrangement of the side of the first light source 4 facing the first light guide plate 1 and the side of the second light source 5 facing the second light guide plate 3. Alternatively, in the present disclosure, the first substrate 42 is thicker than the second substrate, and a portion of the first substrate 42 that extends beyond the second substrate acts as a raised cushion, so that the side of the first light source 4 facing the first light guide plate 1 and the side of the second light source 5 facing the second light guide plate 3 are realized to be staggered.

Exemplarily, as shown in FIG. 5, the backlight module 100 further includes a first adhesive layer 6, and the first adhesive layer 6 is provided between the first substrate 42 of the first light source 4 and the second portion 52 of the second light source 5.

For example, the first adhesive layer 6 may be made of a thermally conductive adhesive, which can conduct heat generated by the first light source 4 and the second light source 5 to prevent local overheating. As shown in FIG. 3a, heat generated by the first light source 4 may further be conducted to the second portion 52 of the second light source 5, and finally conducted to the back plate 10 described below to be released.

In some examples, the thickness of the first substrate 42 of the first light source 4 is 0.8 mm, the thickness of the second portion 52 of the second light source 5 is 0.8 mm, and the thickness of the first adhesive layer 6 that is between the first substrate 42 of the first light source 4 and the second portion 52 of the second light source 5 is 0.25 mm. By setting the above dimensions relatively small, the space in the backlight module 100 that is occupied by the first light source 4 and the second light source 5 may be reduced, which is beneficial to realizing a miniaturized design of the backlight module 100.

In some embodiments, as shown in FIG. 3b, where FIG. 3b is a partially enlarged view of the region N in FIG. 3a, the backlight module 100 further includes a light-shielding component 7. In the direction perpendicular to the reference plane M, the light-shielding component 7 is located between the first light source 4 and the second light guide plate 3. An orthographic projection of the light-shielding component 7 on the reference plane M covers an orthographic projection of at least a portion of the first light source 4 on the reference plane M.

Exemplarily, a material of the light-shielding component 7 includes a light-absorbing material, so the light-shielding component 7 can absorb and block light, and prevent the light from passing therethrough.

Exemplarily, along a direction from the first incident surface 1B toward the first light source 4, an orthographic projection of the light-shielding component 7 on the reference plane M may cover an orthographic projection of a portion of the first light source 4 on the reference plane M, for example, the orthographic projection of the light-shielding component 7 on the reference plane M covers an orthographic projection of the first light-emitting device 41 on the reference plane M; alternatively, the orthographic projection of the light-shielding component 7 on the reference plane M may cover an orthographic projection of the entire first light source 4 on the reference plane M, for example, the orthographic projection of the light-shielding component 7 on the reference plane M covers orthographic projections of the first light-emitting device 41 and the first substrate 42 on the reference plane M.

Exemplarily, along a direction in which the first light incident surface 1B extends, an orthographic projection of the light-shielding component 7 on the reference plane M may cover an orthographic projection of a portion of the first light source 4 on the reference plane M, for example, the first light source 4 includes ten first light-emitting devices 41, and the orthographic projection of the light-shielding component 7 on the reference plane M covers orthographic projections of eight of the first light-emitting devices 41 on the reference plane M; alternatively, the orthographic projection of the light-shielding component 7 on the reference plane M may cover an orthographic projection of the entire first light source 4 on the reference plane M, for example, in a case where the first light source 4 includes ten first light-emitting devices 41, the orthographic projection of the light-shielding component 7 on the reference plane M covers orthographic projections of these ten first light-emitting devices 41 and the first substrate 42 on the reference plane M.

Exemplarily, as shown in FIG. 3b, the first light source 4 and the second light source 5 have a gap therebetween. The light emitted by the first light source 4 may directly enter the second light guide plate 3 through this gap, thereby affecting the anti-peeping display effect of the display device 1000. By providing the light-shielding component 7, the light-shielding component 7 can be used to block the above-mentioned gap to prevent the light emitted by the first light source 4 from entering the second light guide plate 3 through the above-mentioned gap and affecting the anti-peeping display function of the display device 1000. Furthermore, the light-shielding component 7 can also prevent people from seeing the light shadow of the first light source 4 through the display panel 200 and the second light guide plate 3 under a large viewing angle, thereby improving the display effect of the display device 1000.

In some embodiments, as shown in FIG. 3b, in a direction parallel to the reference plane M, the light-shielding component 7 extends to a space between the first light guide plate 1 and the second light guide plate 3.

With this arrangement, the area of an orthographic projection of the light-shielding component 7 on a plane where the second light guide plate 3 is located can be increased, and the minimum degree of an included angle between the light emitted by the first light-emitting device 41 and the plane where the second light guide plate 3 is located can be reduced. In this way, shielding effect of the light-shielding component 7 on the first light source 4 may be further enhanced, the interference of the first light source 4 on the second light source 5 may be further reduced, and the light emitted from the first light source 4 may be further avoided from affecting the anti-peeping display function of the display device 1000. Accordingly, the light-shielding component 7 may further prevent people from seeing the light shadow of the first light source 4 through the display panel 200 and the second light guide plate 3 under a large viewing angle, further improving the display effect of the display device 1000.

In some examples, as shown in FIG. 3b, the second light incident surface 3B extends beyond the first light incident surface 1B.

In this way, in a direction from the first light source 4 toward the first light incident surface 1B, more space can be left for the first light source 4 to facilitate the staggered arrangement of the first light source 4 and the second light source 5.

In some embodiments, as shown in FIG. 3b, a partial boundary, away from the second light source 5, of a boundary of an orthographic projection of the light-shielding component 7 on the reference plane, and a partial boundary, away from the second light source 5, of a boundary of an orthographic projection of the first light source 4 on the reference plane have a distance $L_1$ therebetween, and the distance $L_1$ is greater than or equal to 3.5 mm.

Exemplarily, the above distance $L_1$ may be 3.5 mm, 3.8 mm, 4.0 mm, 4.5 mm, 5 mm, or the like.

By making the distance $L_1$ greater than or equal to 3.5 mm, the light-shielding component 7 can be of sufficient size so that the light-shielding component 7 has a good blocking effect on the first light source 4, improving the display effect of the display device 1000.

It will be noted that the structure of the light-shielding component 7 may have a variety of types, and light-shielding components 7 having different structures are described in detail below in conjunction with the accompanying drawings.

In some possible embodiments, as shown in FIG. 3b, the backlight module further includes a light adjustment layer 8 and a first light-shielding layer 9. The light adjustment layer 8 is located between the anti-peeping film 2 and the first light guide plate 1, and the light adjustment layer 8 includes a third portion 8a extending to the top of the first light source 4. The first light-shielding layer 9 is located on a surface of the third portion 8a of the light adjustment layer 8 at a side. The first light-shielding layer 9 and the third portion 8a of the light adjustment layer 8 form the light-shielding component 7.

Exemplarily, the light adjustment layer 8 may have a single-layer structure or a multi-layer structure.

For example, the light adjustment layer 8 has a single-layer structure. The light adjustment layer 8 may be, for example, a brightness enhancement film. The brightness enhancement film can guide light incident on the brightness enhancement film to improve light efficiency. The light adjustment layer 8 may also be a film layer with other functions, which is not limited in the present disclosure.

As another example, the light adjustment layer 8 has a multi-layer structure. The light adjustment layer 8 includes, for example, a diffusion sheet 81 located between the anti-peeping film 2 and the first light guide plate 1, and a prism layer 82 located between the anti-peeping film 2 and the diffusion sheet 81. The diffusion sheet 81 can make the light emitted from the first light guide plate 1 more uniform; and the prism layer 82 can guide the light emitted from the first light guide plate 1 to increase the light extraction efficiency.

By arranging the light adjustment layer 8 between the anti-peeping film 2 and the first light guide plate 1, the light emitted from the first light exit surface 1A of the first light guide plate 1 can be further adjusted.

Exemplarily, on the reference plane M, the first light source 4 has a certain thickness, and a fact that the third portion 8a of the light adjustment layer 8 extends to the top of the first light source 4 includes that: the third portion 8a is in contact with a small proportion of the top of the first light source 4, or the third portion 8a is in contact with a large proportion of the top of the first light source 4.

Exemplarily, the first light-shielding layer 9 is an opaque coating that can block light. For example, the first light-shielding layer 9 is made of black ink. The first light-shielding layer 9 is formed by spraying the black ink on the third portion 8a of the light adjustment layer 8.

It can be understood that the third portion 8a is a carrier of the first light-shielding layer 9, and in a case where the light adjustment layer 8 includes multiple film layers, the third portion 8a may be a portion of any one of the multiple film layers.

The first light-shielding layer 9 may be located on a surface of the third portion 8a of the light adjustment layer 8 proximate to the first light guide plate 1, or the first light-shielding layer 9 may be located on a surface of the third portion 8a of the light adjustment layer 8 away from the first light guide plate 1.

For example, as shown in FIG. 3b, a portion of the diffusion sheet 81 extending to the top of the first light source 4 forms the third portion 8a, and the first light-shielding layer 9 is located on a side of the diffusion sheet 81 proximate to the first light guide plate 1. In the present disclosure, optionally, the size of the prism sheet is the same as the size of the second light guide plate, and the size of the diffusion sheet is greater than the size of the prism sheet, that is, the diffusion sheet is provided with an extension, which in turn allows the first light-shielding layer to be arranged to achieve light shielding.

Such an arrangement can prevent the light emitted from the first light source 4 from entering the diffusion sheet 81 and passing through the diffusion sheet 81 into the second light guide plate 3, thereby ensuring the blocking effect of the light-shielding component 7 that is formed by the first light-shielding layer 9 and the third portion 8a on the first light source 4.

Further, the quantity of the first light-shielding layers 9 may be a plurality, and the plurality of first light-shielding layers 9 may be provided overlapping one another, which may further enhance the light-shielding effect of the light-shielding component 7 that is formed by the first light-shielding layer 9 and the third portion 8a of the light adjustment layer 8 together.

By arranging the first light-shielding layer 9 on a surface of the third portion 8a of the light adjustment layer 8, and causing the third portion 8a of the light adjustment layer 8 to extend to the top of the first light source 4, the blocking on the light emitted from the first light source 4 can be realized without additionally adding other components. This may avoid increasing the structural complexity and assembly difficulty of the backlight module 100 on the basis of avoiding the light emitted from the first light source 4 from entering the second light guide plate 3 to affect the anti-peeping display function of the display device 1000.

In some embodiments, as shown in FIG. 3b, the third portion 8a of the light adjustment layer 8 and the second portion 52 of the second light source 5 have a gap $L_2$ therebetween.

It can be understood that the gap $L_2$ between the third portion 8a of the light adjustment layer 8 and the second portion 52 of the second light source 5 means that there is no direct contact between the third portion 8a of the light adjustment layer 8 and the second portion 52 of the second light source 5.

Exemplarily, the light adjustment layer 8 may be an organic film layer, and the size of the light adjustment layer 8 will change in the light reference plane M in a case of a change in the external ambient temperature.

For example, in a case of an increase in the external temperature, the light adjustment layer 8 expands in a plane where the light adjustment layer 8 is located, making the size of the light adjustment layer 8 larger, which causes the edge of the light adjustment layer 8 to move in a direction of proximity to the second portion 52 of the second light source 5, and which puts the light adjustment layer 8 at risk of interfering with the second portion 52 of the second light source 5.

By providing the gap $L_2$ between the third portion 8a of the light adjustment layer 8 and the second portion 52 of the second light source 5, sufficient expansion space can be left for the size change of the light adjustment layer 8, and wrinkles can be prevented from occurring when the size of the light adjustment layer 8 becomes larger. Moreover, the above gap $L_2$ may also leave allowance for assembly error for the assembly of the light adjustment layer 8, reducing the difficulty of assembling the light adjustment layer 8.

In some examples, the dimension of the gap $L_2$ is greater than or equal to 0.3 mm.

Exemplarily, the dimension of the above-mentioned gap $L_2$ is 0.3 mm, 0.6 mm, 0.8 mm, 1.0 mm, 1.5 mm, or the like.

The inventors of the present disclosure have verified that setting the size of the gap $L_2$ to be greater than or equal to 0.3 mm can effectively reduce the risk of interference between the light adjustment layer 8 and the second portion 52 of the second light source 5, and significantly reduce the difficulty of assembling the light adjustment layer 8.

In some embodiments, as shown in FIG. 3b, the first light exit surface 1A is flush or substantially flush with the top of the first substrate 42, and the light-shielding component 7 covers the first light-emitting device 41 and a portion of the first substrate 42.

Exemplarily, the top of the first substrate 42 is higher than the top of the first light-emitting device 41 so that the first light-emitting device 41 can be protected from damage to the first light-emitting device 41 caused by a component located above the first light-emitting device 41 during assembly.

By making the first light exit surface 1A flush or substantially flush with the top of the first substrate 42, the light-shielding component 7 and the first substrate 42 can be brought into closer contact in a direction perpendicular to the first light guide plate 1. In this way, in the case where the light-shielding component 7 covers the first light-emitting device 41 and a portion of the first substrate 42, light emitted from the first light-emitting device 41 of the first light source 4 can be prevented from being emitted through the gap between the light-shielding component 7 and the first substrate 42, and the light emitted from the first light-emitting device 41 may be better shielded. This in turn prevents the light emitted by the first light-emitting device 41 of the first light source 4 from affecting the anti-peeping display function of the display device 1000, prevents people from seeing the light shadow of the first light-emitting device 41 through the display panel 200 and the second light guide plate 3 in a large viewing angle situation, and improves the display effect of the display device 1000.

In some examples, as shown in FIG. 3b, a lower edge, away from the second light guide plate 3, of the first substrate 42 of the first light source 4 is flush with a lower edge, away from the second light guide plate 3, of the second portion 52 of the second light source 5. This facilitates the alignment of the first light-emitting device 41 of the first light source 4 with the first light incident surface 1B of the first light guide plate 1, as well as the alignment of the first portion 51 of the second light source 5 with the second light incident surface 3B of the second light guide plate 3, in the process of assembling the first light source 4 and the second light source 5, and simplifies the assembly process of the backlight module 100.

In some embodiments, as shown in FIG. 3a, the second light guide plate 3 further has a second non-light incident surface 3C intersecting the second light exit surface 3A, and the second non-light incident surface 3C and the second light incident surface 3B surround the second light exit surface 3A.

It can be understood that in a case where the second light guide plate 3 is a rectangular body and there is one second light incident surface 3B, the second non-light incident surface 3C is composed of the remaining three side surfaces other than the second light incident surface 3B among all side surfaces of the second light guide plate 3.

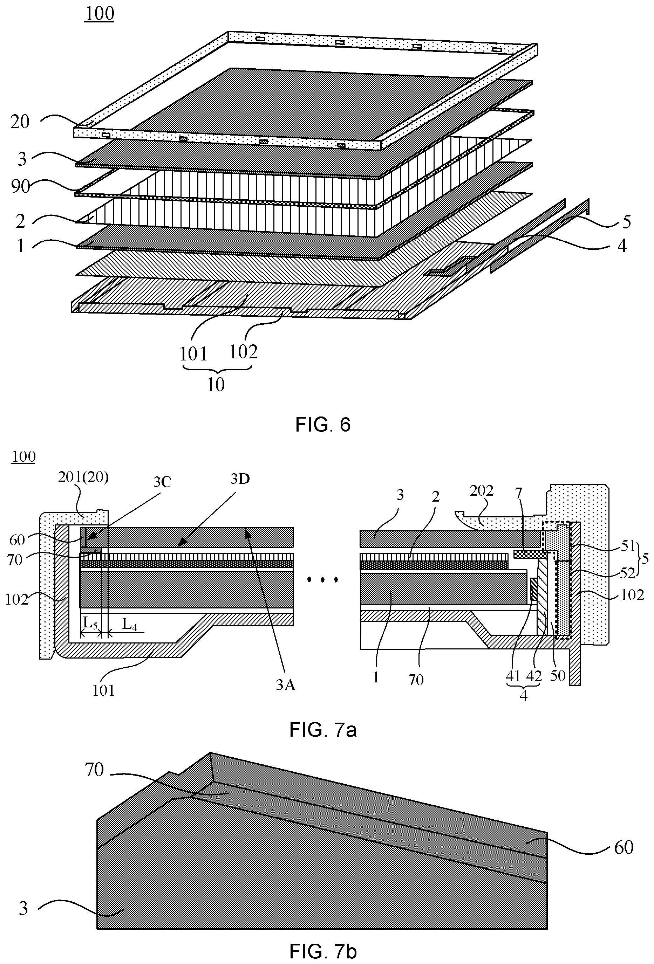

In some embodiments, as shown in FIG. 6, the backlight module 100 further includes: a back plate 10 and a plastic frame 20. The back plate 10 has an installation depression, and the first light guide plate 1, the anti-peeping film 2, the light adjustment layer 8, the second light guide plate 3, the first light source 4, and the second light source 5 are located within the installation depression. The plastic frame 20 is fastened to the back plate 10. As shown in FIG. 3a, the plastic frame 20 includes a first bending edge 201, and the first bending edge 201 is located at the top of the back plate 10. An orthographic projection of the first bending edge 201 on the reference plane M, covers an orthographic projection of an edge portion, corresponding to the second non-light incident surface 3C, of the second light guide plate 3, an orthographic projection of an edge portion, corresponding to the second non-light incident surface 3C, of the anti-peeping film 2, and an orthographic projection of an edge portion, corresponding to the second non-light incident surface 3C, of the light adjustment layer 8.

Exemplarily, the back plate 10 has high strength and may provide protection for the first light guide plate 1, the anti-peeping film 2, the light adjustment layer 8, the second light guide plate 3, the first light source 4, and the second light source which are located within the installation depression.

Exemplarily, as shown in FIG. 6, the plastic frame 20 has an opening, and light emitted from the first light guide plate 1 and the second light guide plate 3 can be directed to the display panel 200 through the opening of the plastic frame 20 to provide backlight for the display panel 200.

It can be understood that the first bending edge 201 is located at the same side of the display device 1000 as the second non-light incident surface 3C, and the two are provided one-to-one, and the first bending edge 201 is the same as the second non-light incident surface 3C in terms of quantity.

For example, in a case where the quantity of second non-light incident surfaces 3C is three, the quantity of first bending edges 201 is also three; and in a case where the quantity of the second non-light incident surfaces 3C is two, the quantity of the first bending edges 201 is also two.

Exemplarily, after the plastic frame 20 is fastened to the back plate 10, the first bending edge 201 of the plastic frame 20 can limit positions of the first light guide plate 1, the anti-peeping film 2, the light adjustment layer 8, the second light guide plate 3, the first light source 4, and the second light source 5 which are located within the installation depression surrounded by the back plate 10, avoiding the first light guide plate 1, the anti-peeping film 2, the light adjustment layer 8, the second light guide plate 3, the first light source 4, and the second light source 5 from being damaged due to shaking.

Exemplarily, as shown in FIG. 3a, by providing the first bending edge 201, edge portions, corresponding to the second non-light incident surface 3C and covered by the first bending edge 201, of the second light guide plate 3, the anti-peeping film 2, and the light adjustment layer 8 can be blocked, so as to avoid people from seeing a bright edge as well as a black shadow of an edge of the above optical film layer (e.g., the anti-peeping film 2) under a large viewing angle.

Exemplarily, as shown in FIG. 3a, the width of the edge portions, corresponding to the second non-light incident surface 3C and covered by the first bending edge 201, of the second light guide plate 3, the anti-peeping film 2, and the light adjustment layer 8 is $L_3$, where $L_3 \geq 2.3$ mm, which ensures that the first bending edge 201 has a blocking effect and avoids people from seeing the bright edge as well as the black shadow of the edge of the above optical film layer (e.g., the anti-peeping film 2) under a large viewing angle.

For example, the above $L_3$ may be 2.3 mm, 2.6 mm, 3.0 mm, 3.2 mm, 3.5 mm, or the like. Further, in a case where $L_3$ is greater than or equal to 2.3 mm, the value of $L_3$ may be as small as possible, so as to reduce the area of a portion of the second light exit surface 3A of the second light guide plate 3 that is blocked by the plastic frame 20 while ensuring the above blocking effect, which is conducive to enlarging a display area of the display device 1000 and realizing a narrow frame design.

In some embodiments, as shown in FIG. 3a, the back plate 10 has a first through hole 10A and a second through hole 10B. The backlight module 100 further includes a first power supply line 30 and a second power supply line 40. The first power supply line 30 passes through the first through hole 10A and is electrically connected to the first light source 4. The second power supply line 40 passes through the second through hole 10B and is electrically connected to the second light source 5.

It can be understood that the display device 1000 further includes a power supply component that provides electrical energy to the first light source 4 and the second light source 5.

Exemplarily, one end of the first power supply line 30 is electrically connected to a connector on the first substrate 42 in the first light source 4, and the other end of the first power supply line 30 is electrically connected to the power supply component, such that electrical energy from the power supply component is transmitted to the first substrate 42 through the first power supply line 30 to provide electrical energy for the first light-emitting device 41 of the first light source 4; one end of the second power supply line 40 is electrically connected to a connector on the second portion 52 in the second light source 5, and the other end of the second power supply line 40 is electrically connected to the power supply component, such that electrical energy from the power supply component is transmitted to the second portion 52 through the second power supply line 40 to provide electrical energy for the second light-emitting device of the second light source 5.

Further, combining FIGS. 3a and 5, the first power supply line 30 and the second power supply line 40 are located at opposite ends in an extension direction of the first light-emitting device 41, and accordingly, the first through hole 10A and the second through hole 10B are located at opposite ends along the extension direction of the first light-emitting device 41 on the back plate 10, which can make the first power supply line 30 and the second power supply line 40 farther apart to avoiding interference of the signals transmitted in the first power supply line 30 and the second power supply line 40, which may affect the luminous effect of the first light source 4 and the second light source 5.

In the embodiments addressed above, the first bending edge 201 of the plastic frame 20 can be used to block the edge portions, corresponding to the second non-light incident surface 3C and covered by the first bending edge 201, of the second light guide plate 3, the anti-peeping film 2, and the light adjustment layer 8, so as to avoid people from seeing the bright edge as well as the black shadow of the edge of the above optical film layer (e.g., the anti-peeping film 2) under a large viewing angle. The present disclosure also provides other methods to avoid people from seeing the bright edge as well as the black shadow of the edge of the above optical film layer (e.g., the anti-peeping film 2) under a large viewing angle.

In some other possible embodiments, as shown in FIG. 7a, the backlight module 100 further includes a fixing component 50 connected to the light-shielding component 7. The fixing component 50 is located between the first light source 4 and the second portion 52 of the second light source 5.

With this arrangement, the fixing component 50 can be fixed through the first light source 4 and the second portion 52 of the second light source 5, so that the light-shielding component 7 connected to the fixing component 50 can be fixed.

Exemplarily, the fixing component 50 and the first light source 4 are provided therebetween with an attachment adhesive tape, and the fixing component 50 and the second portion 52 of the second light source 5 are provided therebetween with an attachment adhesive tape.

Further, the attachment adhesive tape may be the first adhesive layer 6 described above.

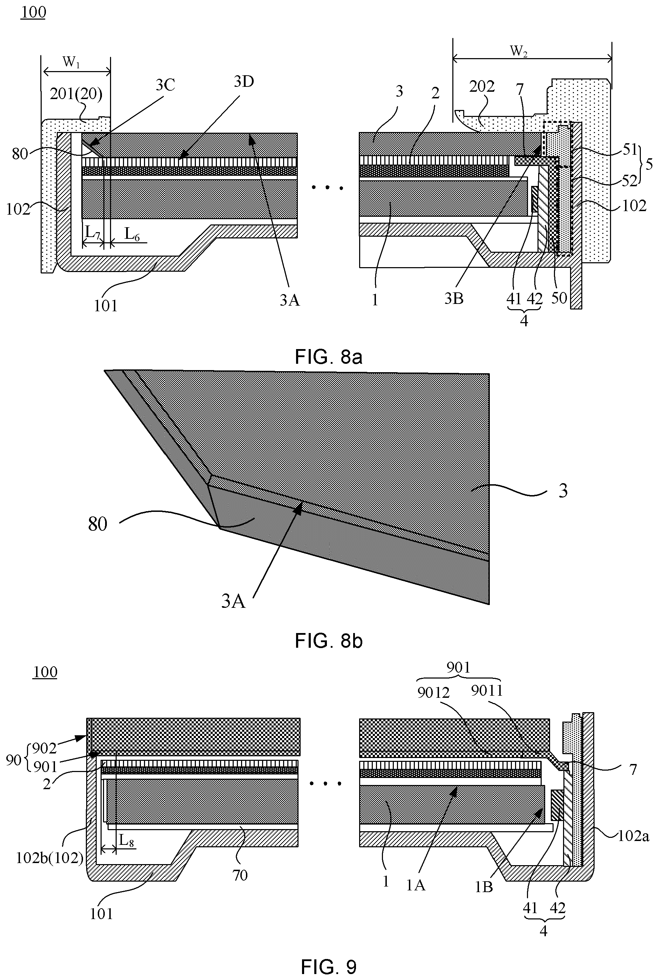

In some embodiments, as shown in FIG. 8a, the light-shielding component 7 and the fixing component 50 are of a one-piece structure.

Such a configuration can enhance the strength of a connection between the light-shielding component 7 and the fixing component 50, and can reduce connecting components between the light-shielding component 7 and the fixing component 50, which is conducive to reducing the space occupied by the light-shielding component 7 and the fixing component 50.

In some examples, as shown in FIGS. 7a and 8a, the light-shielding component 7 covers the first light source 4, the fixing component 50 is connected to a side surface of the light-shielding component 7 proximate to the second light source 5, and a cross-section pattern of the light-shielding component 7 and the fixing component 50 is L-shaped.

Exemplarily, as shown in FIG. 7a, the side surface of the light-shielding component 7 proximate to the second light source 5 extends to the fixing component 50 and is connected to the fixing component 50 through a connecting component, thereby realizing a fixed connection between the light-shielding component 7 and the fixing component 50. With this configuration, it is easy to remove and install the light-shielding component 7 and reduce the space occupied by the light-shielding component 7.

In the embodiments addressed above, by providing the light-shielding component 7, the impact of the first light source 4 on the anti-peeping display function of the display device 1000 can be avoided. In order to further improve the display effect of the display device 1000, the present disclosure further provides the following embodiments.

In some embodiments, as shown in FIG. 7a, the second light guide plate 3 further has a bottom surface 3D, the bottom surface 3D faces away from the second light exit surface 3A, and the second non-light incident surface 3C is perpendicular to the second light exit surface 3A.

The backlight module 100 further includes: a second light-shielding layer 60 covering the second non-light incident surface 3C, and a third light-shielding layer 70 covering a portion of the bottom surface 3D proximate to the second non-light incident surface 3C, as shown in FIGS. 7a and 7b, the second light-shielding layer 60 is connected to the third light-shielding layer 70.

Exemplarily, the material of the second light-shielding layer 60 and the material of the third light-shielding layer 70 both include a light-absorbing material, e.g., the material of the second light-shielding layer 60 and the material of the third light-shielding layer 70 are black ink. The second light-shielding layer 60 is formed by spraying the black ink on the second non-light incident surface 3C thereby forming the second light-shielding layer 60, and the third light-shielding layer 70 is formed by spraying the black ink on a portion of the bottom surface 3D proximate to the second non-light incident surface 3C thereby forming the third light-shielding layer 70.

It will be appreciated that the second light guide plate 3, the anti-peeping film 2, and the light adjustment layer 8 are usually provided in alignment on their sides away from the second light source 5 in order to facilitate alignment during assembly of the backlight module 100. Therefore, by providing the second light-shielding layer 60 on the second non-light incident surface 3C and providing the third light-shielding layer 70 on the portion of the bottom surface 3D proximate to the second non-light incident surface 3C, the second light-shielding layer 60 and the third light-shielding layer 70, after connected, can shield the edge of the optical film layer (e.g., the anti-peeping film 2) between the first light guide plate 1 and the second light guide plate 3 to avoid people from seeing the bright edge as well as the black shadow of the edge of the optical film layer (e.g., the anti-peeping film 2) under a large viewing angle.

In some embodiments, as shown in FIG. 7a, the first bending edge 201 of the plastic frame 20 covers the second light-shielding layer 60 and the third light-shielding layer 70.

In some examples, as shown in FIG. 7a, a partial boundary, away from the second light-shielding layer 60, of a boundary of an orthographic projection of the third light-shielding layer 70 on the reference plane M, and a partial boundary, away from the second light-shielding layer 60, of a boundary of an orthographic projection of the bending edge 201 on the reference plane M have a distance $L_4$ therebetween, and the distance $L_4$ is greater than or equal to 0.4 mm.

Exemplarily, the distance $L_4$ may be 0.4 mm, 0.5 mm, 0.7 mm, 0.8 mm, 1.0 mm, or the like.

By setting $L_4$ to be greater than or equal to 0.4 mm, it can prevent people from seeing black shadows under a large viewing angle, avoid the phenomenon that pixels at the edge of the display panel 200 cannot be illuminated, and improve the display effect of the display device 1000.

In some examples, as shown in FIG. 7a, an orthographic projection of the third light-shielding layer 70 on the reference plane M partially overlaps with an orthographic projection of the anti-peeping film 2 on the reference plane M; a partial boundary, away from the second light-shielding layer 60, of a boundary of the orthographic projection of the third light-shielding layer 70 on the reference plane M, and a boundary of the orthographic projection of the anti-peeping film 2 on the reference plane M have a minimum distance $L_5$ therebetween, and the minimum distance $L_5$ is greater than or equal to 0.6 mm.

Exemplarily, the minimum distance $L_5$ may be 0.6 mm, 0.7 mm, 0.8 mm, 1.0 mm, 1.4 mm, or the like.

By setting $L_5$ to be greater than or equal to 0.6 mm, the shielding effect of the third light-shielding layer 70 on the edge of the optical film layer (e.g., the anti-peeping film 2) located between the first light guide plate 1 and the second light guide plate 3 can be ensured, so as to avoid people from seeing the bright edge as well as the black shadow of the edge of the aforesaid optical film layer (e.g., the anti-peeping film 2) under a large viewing angle, and to improve the displaying effect of the display device 1000.

In some other embodiments, as shown in FIG. 8a, the second non-light incident surface 3C of the second light guide plate 3 intersects the bottom surface 3D of the second light guide plate 3, the bottom surface 3D of the second light guide plate 3 faces away from the second light exit surface 3A, and an included angle between the second non-light incident surface 3C and the bottom surface 3D is an obtuse angle. The backlight module 100 further includes a fourth light-shielding layer 80 covering the second non-light incident surface 3C.

It will be appreciated that the second non-light incident surface 3C and the fourth light-shielding layer 80 are both provided obliquely.

Exemplarily, the material of the fourth light-shielding layer 80 is a light-absorbing material, e.g., the material of the fourth light-shielding layer 80 is black ink, and the fourth light-shielding layer 80 can be formed by spraying the black ink on the second non-light incident surface 3C.

Exemplarily, as shown in FIG. 8b, the upper edge of the fourth light-shielding layer 80 and the second light exit surface 3A of the second light guide plate 3 has a distance therebetween, and the distance can avoid the appearance of a tip on the second light guide plate 3, thereby preventing the second light guide plate 3 from breaking at the tip.

By providing the fourth light-shielding layer 80, the edge of the optical film layer (e.g., the anti-peeping film 2) between the first light guide plate 1 and the second light guide plate 3 can be shielded to prevent people from seeing the bright edge as well as the black shadow of the edge of the optical film layer (e.g., the anti-peeping film 2) under a large viewing angle.

In some examples, as shown in FIG. 8a, a partial boundary, proximate to the bottom surface 3D, of a boundary of an orthographic projection of the fourth light-shielding layer 80 on the reference plane M, and a partial boundary, proximate to the bottom surface 3D, of a boundary of an orthographic projection of the first bending edge 201 on the reference plane M have a distance $L_6$ therebetween, and the distance $L_6$ is greater than or equal to 0.4 mm.

Exemplarily, the distance $L_6$ may be 0.4 mm, 0.5 mm, 0.7 mm, 0.8 mm, 1.0 mm, or the like.

By setting $L_6$ to be greater than or equal to 0.4 mm, it can prevent people from seeing black shadows under a large viewing angle and avoid the phenomenon that pixels at the edge of the display panel 200 cannot be illuminated.

In some examples, as shown in FIG. 8a, the partial boundary, proximate to the bottom surface 3D, of the boundary of the orthographic projection of the fourth light-shielding layer 80 on the reference plane M, and the boundary of the orthographic projection of the anti-peeping film 2 on the reference plane M have a minimum distance $L_7$ therebetween, and the minimum distance $L_7$ is greater than or equal to 0.6 mm.

Exemplarily, the minimum distance $L_7$ may be 0.6 mm, 0.7 mm, 0.8 mm, 1.0 mm, 1.4 mm, or the like.

By setting $L_7$ to be greater than or equal to 0.6 mm, the shielding effect of the third light-shielding layer 70 on the edge of the optical film layer (e.g., the anti-peeping film 2) located between the first light guide plate 1 and the second light guide plate 3 can be ensured, so as to avoid people from seeing the bright edge as well as the black shadow of the edge of the aforesaid optical film layer (e.g., the anti-peeping film 2) under a large viewing angle.

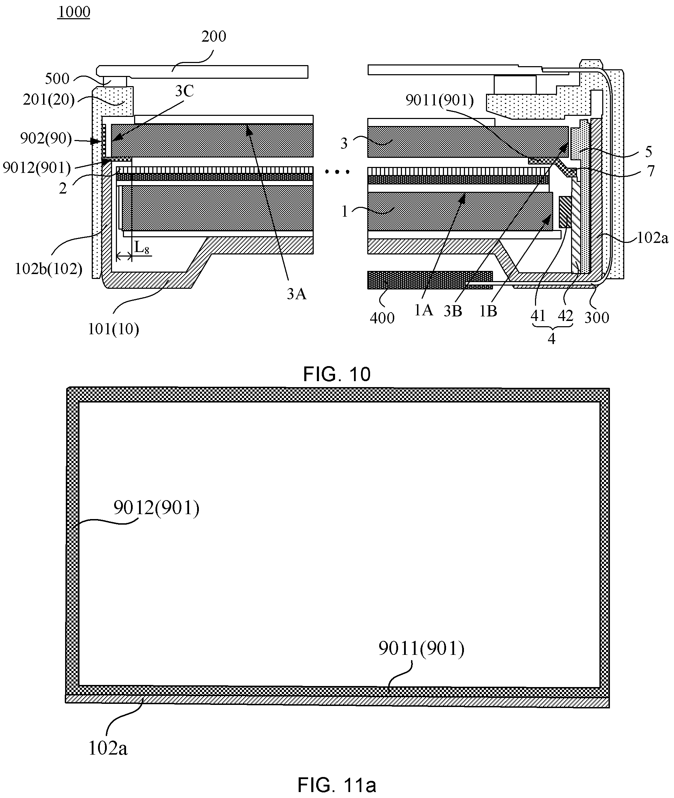

In yet some other possible embodiments, as shown in FIGS. 6, 9, and 10, the backlight module 100 further includes a mid-frame 90. As shown in FIGS. 9 and 10, the mid-frame 90 includes a bottom frame 901. The bottom frame 901 is located between the anti-peeping film 2 and the second light guide plate 3, and the bottom frame 901 is configured to carry the second light guide plate 3. As shown in FIGS. 9 and 10, the bottom frame 901 includes a first bottom plate 9011 at a same side as the first light source 4, and the first bottom plate 9011 extends to the top of the first light source 4. An orthographic projection of the first bottom plate 9011 on the reference plane M covers an orthographic projection of at least a portion of the first light source 4 on the reference plane M, and the first bottom plate 9011 forms the light-shielding component 7.

By providing the first bottom plate 9011, the first light source 4 can be shielded by the first bottom plate 9011, thereby avoiding the provision of other light-shielding components in addition, thereby avoiding the increase in the structural complexity and assembly difficulty of the backlight module 100.

In some embodiments, as shown in FIG. 10, a portion, used to carry the second light guide plate 3, of the first bottom plate 9011 is higher than a portion, located on the top of the first light source 4, of the first bottom plate 9011. A cross-section pattern of the first bottom plate 9011 is step-shaped.

By the above-described arrangement, as shown in FIG. 10, sufficient space can be reserved for the optical film layer (e.g., the anti-peeping film 2) disposed between the first light guide plate 1 and the second light guide plate 3, so that the above-described optical film layer covers the first light guide plate 1 as much as possible, which in turn improves the light output effect of the light emitted from the first light guide plate 1, e.g., the anti-peeping film 2 can enable the light emitted from the first light guide plate 1 to be directed at a smaller range of angles after passing through the anti-peeping film 2, thus ensuring the display effect of the display device 1000.

In some embodiments, as shown in FIG. 10, the top of the first substrate 42 of the first light source 4 is higher than the first light exit surface 1A of the first light guide plate 1; and a portion, located on the top of the first light source 4, of the first bottom plate 9011 is located on the top of the first substrate 42 and in contact with the first substrate 42.

Exemplarily, the first light-emitting device 41 of the first light source 4 is provided on a side of the first substrate 42 proximate to the first light guide plate 1. By having the top of the first substrate 42 higher than the first light exit surface 1A of the first light guide plate 1, sufficient space can be left for the first light-emitting device 41 in a direction perpendicular to the reference plane M. Moreover, with the above arrangement, in the direction perpendicular to the reference plane, the space occupied by the first bottom plate 9011 may also be reduced, leaving sufficient assembly space for the anti-peeping film 2 and the light adjustment layer 8, and reducing the risk of the first bottom plate 9011 causing interference with the anti-peeping film 2 and the light adjustment layer 8. By placing a portion, located on the top of the first light source 4, of the first bottom plate 9011 in contact with the top of the first substrate 42, the first substrate 42 can be made to provide support for the first bottom plate 9011.

In some embodiments, as shown in FIGS. 9 and 10, the back plate 10 includes a second bottom plate 101 and multiple side plates 102 fixed around the second bottom plate 101, where the second bottom plate 101 and the multiple side plates 102 define an installation depression, and the first light guide plate 1, the anti-peeping film 2, the first light source 4, and the second light source 5 are located within the installation depression.

Exemplarily, the second bottom plate 101 is used to provide support for components provided thereon, such as the first light guide plate 1, the first light source 4, and the second light source 5, and the multiple side plates 102 are used to provide support for a component provided thereon, such as the plastic frame described below.

Exemplarily, the second bottom plate 101 and the multiple side plates 102 are of a one-piece structure, which can simplify the fabrication process of the back plate 10, increase the strength of the back plate 10, and provide better support for the components provided on the back plate 10.

It can be understood that the multiple side plates 102 are provided around the second bottom plate 101, and the back plate 10 can provide protection for the first light guide plate 1, the anti-peeping film 2, the light adjustment layer 8, the first light source 4, and the second light source 5 which are located within the installation depression.

In some embodiments, as shown in FIG. 10, the bottom frame 901 further includes a third bottom plate 9012 corresponding to the second non-light incident surface 3C, the first bottom plate 9011 and the third bottom plate 9012 are connected and define an opening, and the opening exposes a portion of the anti-peeping film 2.

By connecting the first bottom plate 9011 and the third bottom plate 9012 of the bottom frame 901, the bottom frame 901 can better support the second light guide plate 3.

By exposing a portion of the anti-peeping film 2 through the opening of the bottom frame 901, the light emitted from the first light guide plate 1 and passing through the anti-peeping film 2 can be emitted through the opening of the bottom frame 901. The larger the opening of the bottom frame 901 is, the more light emitted by the first light guide plate 1 and passing through the anti-peeping film 2 can pass through the opening of the bottom frame 901, thereby improving the light efficiency.

In some examples, as shown in FIGS. 9 and 10, the multiple side plates 102 include a first side plate 102a and a second side plate 102b, the first side plate 102a is opposite the first light incident surface 1B; and the bottom frame 901 is located on the second side plate 102b, and the third bottom plate 9012 abuts against the second side plate 102b.

It can be understood that, the second side plates 102b are opposite and arranged in one-to-one correspondence with the remaining side surfaces of the first light guide plate 1 except for the first light incident surface 1B, and the quantity of the side plates 102b is the same as the quantity of the remaining side surfaces of the first light guide plate 1 other than the first light incident surface 1B.

For example, in a case where there is one first light incident surface 1B of the first light guide plate 1, the quantity of the remaining side surfaces other than the first light incident surface 1B of the first light guide plate 1 is three, and accordingly, the quantity of the side plates 102b is three; and in a case where the quantity of the first light incident surfaces 1B of the first light guide plate 1 is two, the quantity of the remaining side surfaces of the first light guide plate 1 other than the first light incident surfaces 1B is two, and accordingly, the quantity of the side plates 102b is two.

As shown in FIGS. 9 and 10, by placing the third bottom plate 9012 against the second side plate 102b, the second side plate 102b can provide support for the third bottom plate 9012, and thus can provide support for the bottom frame 901.

In some embodiments, as shown in FIG. 10, the mid-frame 90 further includes a side frame 902 located on the third bottom plate 9012, and the side frame 902 is opposite the second non-light incident surface 3C. An orthographic projection of the second light guide plate 3 on the reference plane M is closer to an orthographic projection of the side frame on the reference plane M than an orthographic projection of the first light guide plate 1 on the reference plane M.

It can be understood that, as shown in FIG. 10, the side frame 902 is arranged opposite the second non-light incident surface 3C of the second light guide plate 3, and the second non-light incident surface 3C and the second light incident surface 3B of the second light guide plate 3 surround the second light exit surface 3A. Therefore, the side frame 902 and the second light incident surface 3B surround the second light exit surface 3A.

Exemplarily, as shown in FIG. 9, a plane where the side frame 902 is located and a plane where the bottom frame 901 is located have an included angle or are perpendicular to each other, so during the movement of the second light guide plate 3 disposed on the bottom frame 901 along a direction perpendicular to the second non-light incident surface 3C, the side frame 902 will block the second light guide plate 3, thereby limiting the displacement of the second light guide plate 3 in the direction perpendicular to the second non-light incident surface 3C. Moreover, in the process of assembling the second light guide plate 3, the above-described configuration can also reduce the difficulty of assembling the second light guide plate 3 and improve the stability between the second light guide plate 3 and other structures (e.g., the mid-frame).

In some embodiments, the thickness of the mid-frame 90 is less than the thickness of the back plate 10.

Exemplarily, the thickness of the back plate 10 is 0.8 mm, and the thickness of the mid-frame 90 is 0.3 mm.

By using the mid-frame 90 with a relatively small thickness, as shown in FIGS. 9 and 10, the space occupied by the third bottom plate 9012 in the direction perpendicular to the reference plane M can be reduced, which is beneficial to reducing the thickness of the backlight module 100.

In addition, as shown in FIG. 10, in the direction parallel to the reference plane M, the thickness of the side frame 902 of the mid-frame 90 is smaller as compared to the second side plate 102b of the back plate 10 provided at the position corresponding to the second non-light incident surface 3C of the second light guide plate 3, and therefore, the side frame 902 of the mid-frame 90 occupies a smaller space, which allows for sufficient spacing between the side frame 902 and the second light guide plate 3 to avoid wrinkles caused by an interference between the second light guide plate 3 and the side frame 902 when the size of the second light guide plate 3 becomes larger due to an increase in ambient temperature. Moreover, the distance between the side frame 902 and the second light guide plate 3 may also provide allowance for assembly error for the assembly of the second light guide plate 3, reducing the difficulty of assembly of the second light guide plate 3.

Further, with sufficient spacing between the side frame 902 and the second light guide plate 3, the second light guide plate 3 is able to be further outwardly extended, so that in the direction perpendicular to the reference plane M, the first bending edge 201 of the plastic frame 20 can be made to have a larger area of coverage of the second light guide plate 3, which is more conducive to the design of the second light guide plate 3, and to avoid the insufficiency of space to cause other defects.

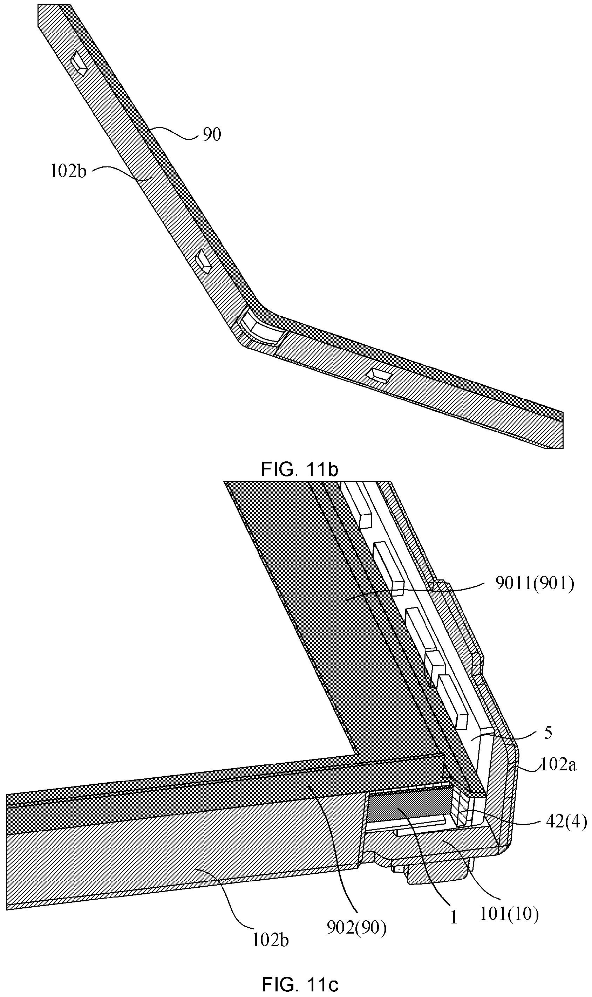

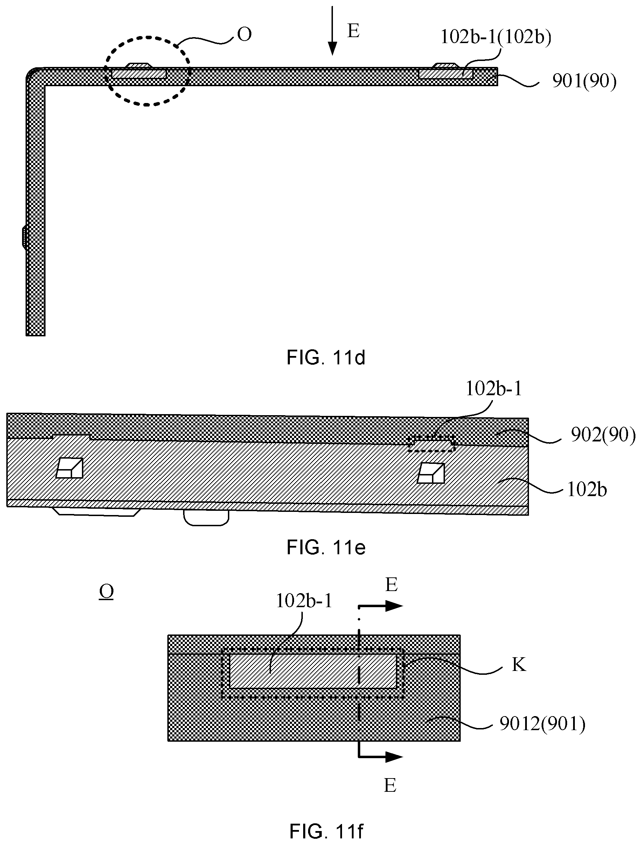

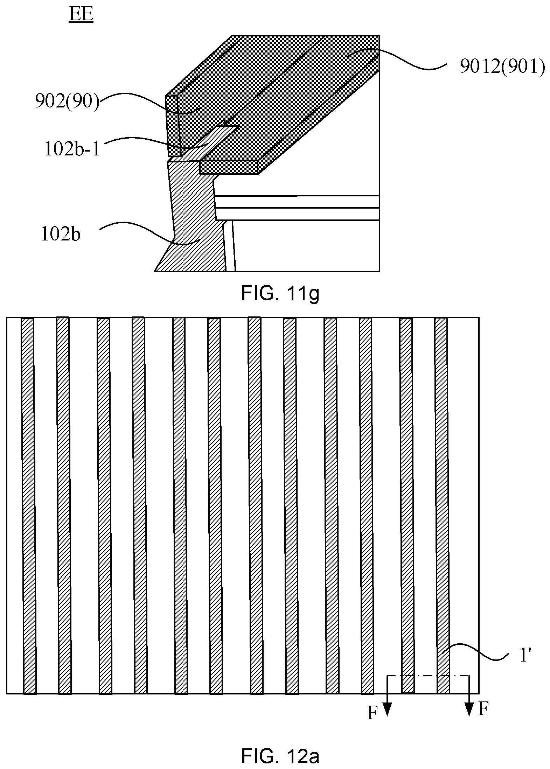

In order to more clearly show the relative positional relationship between the mid-frame 90 and the back plate 10, FIGS. 11a to 11c are provided, where FIG. 11a illustrates a top view structure of the bottom frame 901 of the mid-frame 90 and the first side plate 102a of the back plate 10, FIG. 11b illustrates an oblique view structure of the mid-frame 90 and the side plate 102b of the back plate 10, and FIG. 11c illustrates another oblique view structure of the mid-frame 90 and the back plate 10.

In some embodiments, as shown in FIGS. 11d to 11g, a plurality of projections 102b-1 are provided at the top of the second side plate 102b. As shown in FIG. 11f, a plurality of openings K are provided in a portion of the mid-frame 90 other than the first bottom plate 9011, and a projection 102b-1 is inserted into one of the openings K.

Exemplarily, the protrusions 102b-1 and the openings K are provided one-to-one, and the size of the protrusions 102b-1 and the size of the openings K match with each other, so that the insertion of one protrusion 102b-1 into one opening K can be more solid. By means of the plurality of projections 102b-1 and the plurality of openings K, the positioning of the mid-frame 90 and the back plate 10 can be accomplished, which facilitates the installation of the mid-frame 90 and strengthens the firmness of the cooperation between the mid-frame 90 and the back plate 10.

In yet some other embodiments, as shown in FIG. 10, in the case where the backlight module 100 includes the mid-frame 90, a portion of the bottom frame 901 other than the first bottom plate 9011 extends between the anti-peeping film 2 and the second light guide plate 3, such that the portion of the bottom frame 901 other than the first bottom plate 9011 can shield the edge of the optical film layer (e.g., the anti-peeping film 2) between the first light guide plate 1 and the second light guide plate 3 can be shielded to prevent people from seeing the bright edge as well as the black shadow of the edge of the optical film layer (e.g., the anti-peeping film 2) at a large viewing angle.

In some examples, as shown in FIG. 10, for a boundary of an orthographic projection of the portion of the bottom frame 901 other than the first bottom plate 9011 on the reference plane, this boundary has a partial boundary that is proximate to the center of the second light guide plate 3. This partial boundary and a boundary of an orthographic projection of the optical film layer (e.g., the anti-peeping film 2) described above on the reference plane has a minimum distance $L_8$, and the minimum distance $L_8$ is greater than or equal to 0.6 mm. The reference plane described above is a plane where the second light guide plate 3 is located.

Exemplarily, the minimum distance $L_8$ may be 0.6 mm, 0.7 mm, 0.8 mm, 1.0 mm, 1.4 mm, or the like.

This setting ensures that the portion of the bottom frame 901 other than the first bottom plate 9011 has a blocking effect on the edge of the above optical film layer (e.g., the anti-peeping film 2), and prevents people from seeing the bright edge as well as the black shadow of the edge of the above optical film layer (e.g., the anti-peeping film 2) under a large viewing angle.

In some examples, as shown in FIGS. 9 and 10, the backlight module 100 further includes a reflective layer located on a side of the first light guide plate 1 away from the second light guide plate 3.

That is, the above-mentioned reflective layer is provided between the first light guide plate 1 and the second bottom plate 101.

Exemplarily, the reflective layer can reflect light directed toward the reflective layer from the first light guide plate 1 back to the first light guide plate 1, thereby increasing the light energy utilization efficiency of the first light guide plate 1.

By the above embodiments, the display device 1000 can be made to have an anti-peeping function and a good display effect. In order to enable the display device 1000 to realize a narrow frame display, the present disclosure further provides the following embodiments.

In some embodiments, as shown in FIG. 8a, the first bending edge 201 is located at the top of the back plate 10. An orthographic projection of the first bending edge 201 on the reference plane M covers an orthographic projection of a portion, proximate to the first non-light incident surface 3C, of the second light guide plate 3 on the reference plane M; and a width of the first bending edge 201 is $W_1$, where 3 mm $\leq W_1 \leq$ 8 mm.

For example, the above $W_1$ can be 3 mm, 3.5 mm, 4 mm, 6 mm, or 8 mm.

With this arrangement, the first bending edge 201 can cover the second light exit surface 3A of the second light guide plate 3 as little as possible, thereby enlarging the light exit area of the second light exit surface 3A and facilitating the realization of a narrow frame design of the display device 1000.

In some examples, as shown in FIG. 8a, the plastic frame 20 further includes the second bending edge 202. The second bending edge 202 is located at the top of the back plate 10. An orthographic projection of the second bending edge 202 on the reference plane M covers an orthographic projection of a portion, proximate to the second light incident surface 3B, of the second light guide plate 3 on the reference plane M; and a width of the second bending edge 202 is $W_2$, where 10 mm $\leq W_2 \leq$ 17 mm.

Exemplarily, the second bending edge 202 covers the first light source 4, the second light source 5, and a portion of the second light guide plate 3 proximate to the second light source 5, so that the second bending edge 202 has a larger width W2 compared to the first bending edge 201.

Exemplarily, the above $W_2$ can be 10 mm, 12 mm, 14 mm, 15 mm, or 17 mm.

With this arrangement, the second bending edge 202 can cover the second light exit surface 3A of the second light guide plate 3 as little as possible, thereby enlarging the light exit area of the second light exit surface 3A and facilitating the realization of a narrow frame of the display device 1000 design.

In some examples, as shown in FIG. 10, the display device 1000 further includes a chip-on-film 300 and a circuit board 400.

Exemplarily, the chip-on-film 300 is used to transmit some of the electrical signals required for the display panel 200 to display images. One end of the chip-on-film 300 is electrically connected to the display panel 200, and the other end of the chip-on-film 300 is electrically connected to the circuit board, so that electrical signals on the circuit board can be transmitted to the display panel 200.

Exemplarily, the material of the chip-on-film 300 includes a flexible material, so that the chip-on-film 300 can have good bending performance, and the chip-on-film 300 can be electrically connected to the circuit board 400 after being bent, which is beneficial to the narrow bezel design of the display device 1000.

Exemplarily, as shown in FIG. 10, the circuit board 400 is provided on a side of the backlight back plate 10 away from the display panel 200. Both the back plate 10 and the plastic frame 20 are provided therein with passage slots that enable the chip-on-film 300 to pass through, and the chip-on-film 300 is coupled to the display panel 200 through the above-mentioned passage slots.

In some examples, as shown in FIG. 10, the display device 1000 further includes a foam 500.

Exemplarily, the foam 500 is provided between the display panel plastic frame 20 and the display panel 200.

Exemplarily, the foam 500 has a relatively large elasticity and adhesiveness, and by providing the foam, the display panel 200 can be fixed to the plastic frame 20, and the display panel 200 can have a good anti-vibration property.

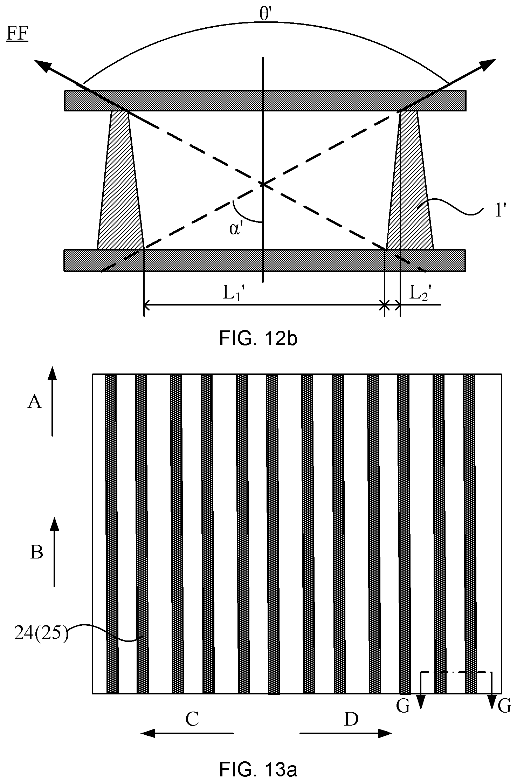

It can be understood that the structure of the anti-peeping film may include a variety of types. Some implementations provide an anti-peeping film whose structure is shown in FIG. 12a, in which the anti-peeping film includes a single-layer of light-shielding strips 1', and two protective layers located at opposite sides of the strips. As shown in FIG. 12b, a cross-section of the light-shielding strip 1' is in the shape of a trapezoid, with the width of the upper base of the trapezoid being w' and the width of the lower base of the trapezoid being W'; a distance between the two protective layers described above (i.e., the height of the trapezoid) is H'; and a distance between the centers of cross-sections of two adjacent light-shielding strips 1' is P'. In this case, in FIG. 12b, a distance between the lower bases of two adjacent trapezoids is $L_1'$, where $L_1' = P' - W'$; and a distance between edges, at the same side, of the upper and lower bottom surfaces in the same trapezoid is $L_2'$, where $L_2' = (W'-w') / 2$. A range $\theta'$ of an anti-peeping viewing angle of the anti-peeping film satisfies the following formula:

$$\theta' = 2\alpha' = 2 * \left( 90 - tan^{-1} \frac{2H'}{2P' - W' - w'} \right)$$ .

From the above formula, it can be seen that to realize an ultra-narrow viewing angle of the anti-peeping film, i.e., a relatively small $\theta'$, it is necessary to decrease the distance P' between the centers of the cross sections of two adjacent light-shielding strips 1', increase the distance (i.e., the height of the trapezoid) H' between the two protective layers described above, or increase the width of the lower bottom surface W' and the width of the upper bottom surface w' of the trapezoid. However, in the existing production process, the above measures for realizing an ultra-narrow viewing angle of the anti-peeping film have difficulties such as difficulty in controlling the precision of mold processing, difficulty in blending black/white glue, difficulty in applying black/white glue, and difficulty in demolding light-shielding strips, which makes it difficult to produce an anti-peeping film of an ultra-narrow viewing angle.

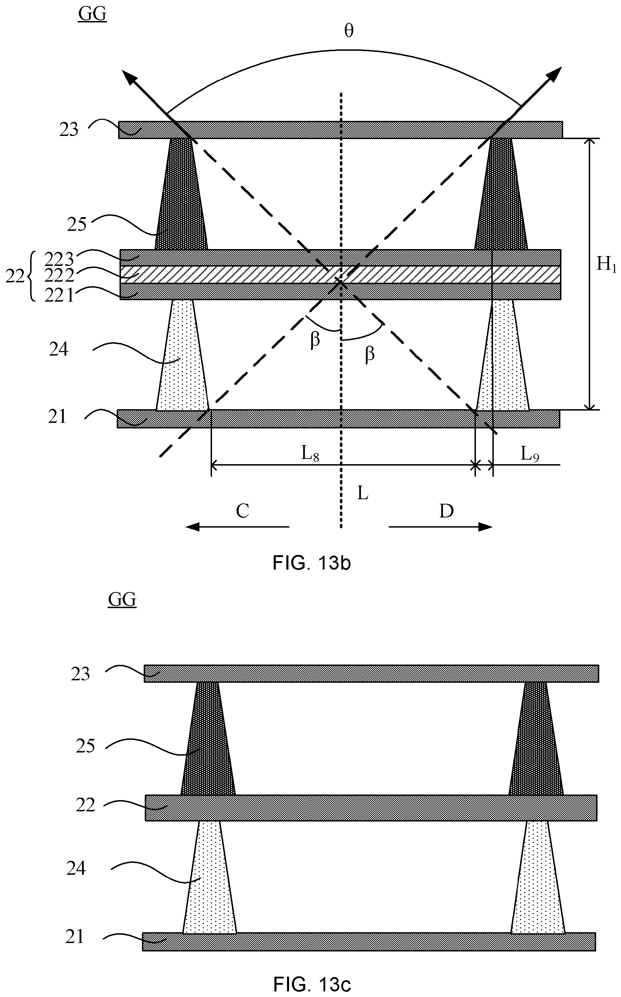

In light of this, some embodiments of the present disclosure provide an anti-peeping film 2. FIG. 13a is a top view of an anti-peeping film 2 in the backlight module 100, and FIGS. 13b and 13c are sectional views taken along the GG line in FIG. 13a. As shown in FIGS. 13b and 13c, the anti-peeping film 2 includes a first protective layer 21, a connection layer 22, and a second protective layer 23 that are sequentially stacked along a direction perpendicular to a plane of the first light guide plate. The anti-peeping film 2 further includes a plurality of first light-shielding strips 24 located between the first protective layer 21 and the connection layer 22, and a plurality of second light-shielding strips 25 located between the connection layer 22 and the second protective layer 23.

Exemplarily, the material of the first protective layer 21, and the material of the second protective layer 23 are transparent materials having a certain strength, so as to ensure that the light can penetrate the anti-peeping film 2, and to provide protection for the first light-shielding strips 24, and the second light-shielding strips 25 within the anti-peeping film 2.

For example, the material of the first protective layer 21 and/or the material of the second protective layer 23 includes polyethylene terephthalate (PET) or the like.

Exemplarily, the connection layer 22 may be a single-layer structure or a multi-layer structure.

For example, as shown in FIG. 13c, the connection layer 22 may be a single-layer structure. In this case, the process of forming the anti-peeping film 2 may be: forming the first protective layer 21, the plurality of first light-shielding strips 24, the connection layer 22, the second protective layer 23 and the plurality of second light-shielding strips 25 in sequence.

As another example, as shown in FIG. 13b, the connection layer 22 has a multi-layer structure. The connection layer 22 may include: a third protective layer 221, a second adhesive layer 222, and a fourth protective layer 223 that are sequentially stacked along the direction perpendicular to the reference plane M. In this case, the process of forming the anti-peeping film 2 may be: first forming the first protective layer 21, the plurality of first light-shielding strips 24, and the third protective layer 221 in sequence, and then forming the fourth protective layer 223, the plurality of second light-shielding strip 25, and the second protective layer 23 in sequence, and finally bonding the third protective layer 221 and the fourth protective layer 223 together through the second adhesive layer 222. It can be understood that in this case, the process of forming the anti-peeping film 2 is relatively simple, so the yield of the anti-peeping film 2 may be improved and the production cost of the anti-peeping film 2 may be reduced.

Exemplarily, the material of the third protective layer 221, and the material of the fourth protective layer 223 are transparent materials having a certain strength, so as to ensure that light can penetrate the connection layer 22, and that the anti-peeping film 2 can be supported and protected. For example, the material of the third protective layer 221, and the material of the fourth protective layer 223 are polyethylene terephthalate (PET).

Exemplarily, the material of the second adhesive layer 222 is a transparent adhesive material for bonding the third protective layer 221 and the fourth protective layer 223 together. For example, the material of the second adhesive layer 222 is optically clear adhesive (OCA).

The following embodiment illustrates the anti-peeping film 2 with the connection layer 22 as an example of a multi-layer structure.

Exemplarily, the material of the first light-shielding strip 24 and the second light-shielding strip 25 are both black ink, and the first light-shielding strip 24 and the second light-shielding strip 25 can block light and prevent light from passing therethrough.

Exemplarily, regions each between adjacent first light-shielding strips 24 and regions each between adjacent second light-shielding strips 25 are filled with transparent ink, so that light can pass through the region between the adjacent first light-shielding strips 24 and the region between the adjacent second light-shielding strips 25.

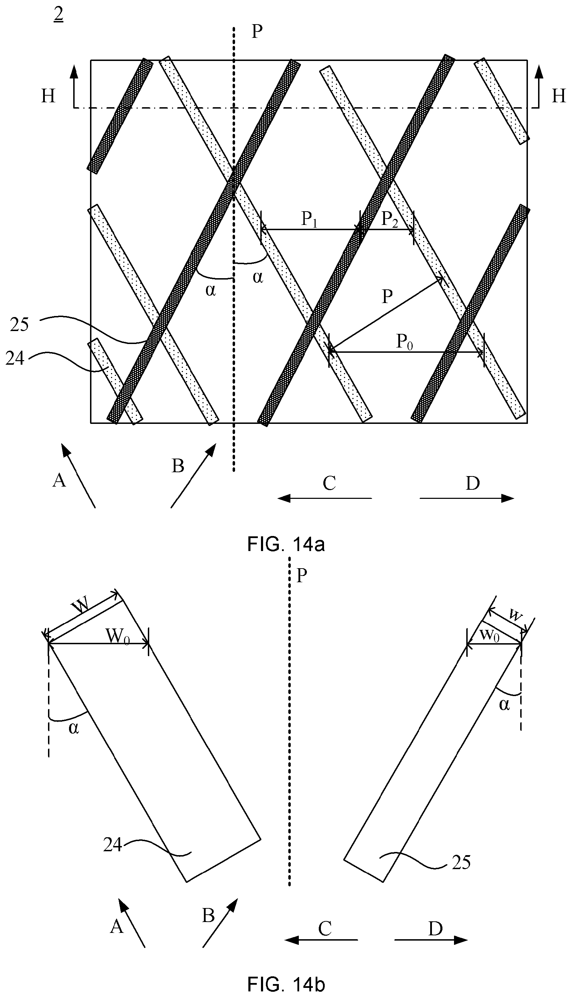

In some examples, as shown in FIGS. 13a and 14a, the plurality of first light-shielding strips 24 extend along a first direction A, and the plurality of second light-shielding strips 25 extend along a second direction B. The first direction A and the second direction B are both parallel to the plane where the first light guide plate is located. The first direction A is the same as the second direction B, or the first direction A intersects the second direction B.

Exemplarily, the first direction A same as the second direction B indicates that an included angle between the first direction A and the second direction B is 0°; and the first direction A intersecting the second direction B indicates that the included angle between the first direction A and the second direction B is greater than 0°.

In contrast to the anti-peeping film in some of the above implementations, the anti-peeping film 2 in the present disclosure has two layers of light-shielding strips. In a case where all the parameters of the light-shielding strips (e.g., a distance between adjacent light-shielding strips, the shape of the cross-section of the light-shielding strips, etc.) are the same as those in some of the above implementations, in the anti-peeping film 2 in the present disclosure, the first light-shielding strips 24 may provide the same range of the anti-peeping viewing angle as the anti-peeping film in some of the above implementations, and the second light-shielding strips 25 may, on the basis of the above-mentioned same range of the anti-peeping viewing angle, further reduce the range of the anti-peeping viewing angle of the anti-peeping film 2 in the present disclosure. Thus, the anti-peeping film 2 in the present disclosure has a smaller range of the anti-peeping viewing angle than the anti-peeping film in some of the above implementations.

Further, as shown in FIGS. 13b and 13c, the first light-shielding strip 24 has a cross-section in a shape of a trapezoid, and the second light-shielding strip 25 has a cross-section in a shape of a trapezoid.

Exemplarily, the cross-section of the first light-shielding strip 24 and the cross-section of the second light-shielding strip 25 have the same shape and equal size. By setting the shape of the cross-section of the first light-shielding strip 24 and the shape of the cross-section of the second light-shielding strip 25 to be the same, the process of fabricating the anti-peeping film 2 including the first light-shielding strips 24 and the second light-shielding strips 25 can be simplified so as to reduce the production cost. In addition, when designing the range of the anti-peeping viewing angle of the anti-peeping film 2, it is possible to reduce the difficulty of designing the anti-peeping film 2 without having to consider the effect of the shapes of the cross-sections of the first light-shielding strip 24 and the second light-shielding strip 25 on the range of the anti-peeping viewing angle.

It should be noted that the above-mentioned positional relationship between the first direction A and the second direction B may be various, for example, the first direction A is the same as the second direction B, or the first direction A intersects the second direction B. The different positional relationships between the first direction A and the second direction B can enable the anti-peeping film 2 to have different ranges of anti-peeping viewing angles. The different positional relationships between the first direction A and the second direction B are described in detail below with different embodiments.

In some embodiments, as shown in FIG. 13a, the first direction A is the same as the second direction B, anti-peeping directions of the anti-peeping film 2 are a third direction C and a fourth direction D, and the third direction C is opposite the fourth direction D. The orthographic projection of the first light-shielding strip 24 on a plane where the first light guide plate is located overlaps the orthographic projection of the second light-shielding strip 25 on the plane where the first light guide plate is located.

It can be understood that the anti-peeping direction of the anti-peeping film 2 is a direction in which a viewing angle of the display device 1000 is narrowed in the anti-peeping mode. That is, in the anti-peeping direction, the range of the viewing angle of the display device 1000 is relatively small.

It should be noted that in a case where the first direction A is the same as the second direction B, the anti-peeping direction of the anti-peeping film 2 is perpendicular to the first direction A or the second direction B. That is, both the first direction A and the second direction B are perpendicular to the third direction C or the fourth direction D. In this case, as shown in FIG. 13b, a distance between centers of cross-sections of two adjacent first light-shielding strips 24 is equal to a distance between centers of cross-sections of two adjacent second light-shielding strips 25; a minimum distance between lower base edges of the cross-sections of two adjacent first light-shielding strips 24 or of two adjacent second light-shielding strips 25 is $L_8$, where $L_8 = P - W$; of the same first light-shielding strip 24 or of the same second light-shielding strip 25, a distance between an edge of the lower base edge of the cross-section and an edge of the upper base edge of the cross-section is $L_9$, where $L_9 = (W - w) / 2$; and the height of a region between the first protective layer 21 and the second protective layer 23 is $H_1$, where $H_1 = 2H + 2h + h_1$. H is the height of the cross-section of the first light-shielding strip 24 or the second light-shielding strip 25; h is the thickness of the third protective layer 221 or of the fourth protective layer 223; $h_1$ is the thickness of the second adhesive layer 222; P is a distance between the centers of the cross-sections of two adjacent first light-shielding strips 24, and is a distance between the centers of cross-sections of two adjacent second light-shielding strips 25; W is the width of a lower base of the cross-section of the first light-shielding strip 24 or of the cross-section of the second light-shielding strip 25; and w is the width of an upper base of the cross-section of the first light-shielding strip 24 or of the cross-section of the second light-shielding strip 25.

For convenience of illustration, as shown in FIG. 13b, a straight line perpendicular to the third direction C or the fourth direction D in a plane where the cross-section of the anti-peeping film 2 is located is hereinafter made as a normal line L.

It will be appreciated that a range of an anti-peeping viewing angle deflected from the normal L to the third direction C is equal to a range of an anti-peeping viewing angle deflected from the normal L to the fourth direction D, both of which are $\beta$.

The anti-peeping viewing angle $\theta$ of the anti-peeping film 2 satisfies the following formula:

$$\theta = 2\beta = 2 * \left( 90° - tan^{-1} \frac{4H + 4h + 2h1}{2P - W - w} \right).$$

Compared to the range of the anti-peeping angle $\theta'$ in one implementation, where the parameters of the light-shielding strips (e.g., a distance between adjacent light-shielding strips, the shape of the cross-section of the light-shielding strips, etc.) are the same as those in the implementations, $4H + 4h + 2h1 > 2H'$, and

$$tan^{-1} \frac{4H + 4hH + 1}{2P - W - w} > tan^{-1} \frac{2H'}{2P' - W' - w'}.$$

Therefore, the range of the anti-peeping viewing angle $\theta$ in the present disclosure is smaller than the range of the anti-peeping viewing angle $\theta'$ in one implementation, that is, the anti-peeping film 2 in the present disclosure can provide a better anti-peeping function.

The inventors of the present disclosure have verified the anti-peeping effect in these embodiments, with the verification results as follows in Table 1:

Table 1

| Item | Anti-peeping film in one implementation | Anti-peeping film in the present disclosure |
|---|---|---|
| Ratio of brightness at 45° viewing angle to brightness at 90° viewing angle under anti-peeping display function | 1.6% | 0.4% to 0.9% |
| Ratio of brightness at 45° viewing angle to brightness at 90° viewing angle under shared display function | 16% | 20.56% |

As can be seen from Table 1, in the present disclosure, under the anti-peeping display function, the ratio of the brightness at 45° viewing angle to the brightness at 90° viewing angle is in the range of 0.4% to 0.9%, which is less than 1.6% in one implementation addressed above, i.e., the display device in the present disclosure has a smaller brightness at 45° viewing angle, which can make it more difficult for people to see the contents displayed on the display device of the present disclosure, and thus, the anti-peeping film in the present disclosure can achieve better anti-peeping effect; in the present disclosure, under the shared display function, the ratio of the brightness at 45° viewing angle to the brightness of at 90° viewing angle is 20.56%, which is greater than 16% in one implementation addressed above, i.e., the display device in the present disclosure is less bright at 45° viewing angle, which can make it easier for people to see the content displayed on the display device of the present disclosure, and thus, the anti-peeping film in the present disclosure can achieve better shared display effect.

In some other embodiments, as shown in FIG. 14a, anti-peeping directions of the anti-peeping film 2 are a third direction C and a fourth direction D; and the third direction C is opposite the fourth direction D. The first direction A and the second direction B both intersect the third direction C.

Further, an included angle between the first direction A and the third direction C can be set equal to an included angle between the second direction B and the fourth direction D, so that the range of the anti-peeping angle of the anti-peeping film 2 in the third direction C can be the same as the range of the anti-peeping angle of the anti-peeping film 2 in the fourth direction D.

For convenience of illustration, as shown in FIG. 14a, a straight line perpendicular to the third direction C or the fourth direction D in a plane where the anti-peeping film 2 is located is hereinafter made as a first perpendicular line P.

In this case, as shown in FIG. 14a, an included angle between the first direction A and the first perpendicular line P, and an included angle between the second direction B and the first perpendicular line P are equal, both being $\alpha$. The included angle between the first direction A and the second direction B is $2\alpha$, where $\alpha$ is greater than 0.

It can be understood that the $\alpha$ is a complementary angle of an included angle between the first direction A and the third direction C, and is a complementary angle of an included angle between the second direction B and the fourth direction D.

As shown in FIG. 14a, $P_1$ is a distance between the center of a second light-shielding strip 25 and the center of a first light-shielding strip 24 adjacent thereto along the third direction C; and $P_2$ is a distance between the center of the second light-shielding strip 25 and the center of a first light-shielding strip 24 adjacent thereto along the fourth direction D. $P_1$ and $P_2$ are set periodically along a direction in which the first perpendicular line P extends.

In the third direction C or the fourth direction D, a center pitch of adjacent first light-shielding strips 24 or of adjacent second light-shielding strips 25 is $P_0$, and $P_0 = P_1 + P_2 = P / \cos(\alpha)$, where P is a minimum distance between centers of two adjacent first light-shielding strips 24, or is a minimum distance between centers of two adjacent second light-shielding strips 25.

As shown in FIG. 14b, the included angle between the first direction A and the first perpendicular line P, and the included angle between the second direction B and the first perpendicular line P are equal, both being $\alpha$. In this case, a width of the lower base of a cross-section pattern of the first light-shielding strip 24 in the third direction is $W_0$, where $W_0 = W / COS(a)$, and accordingly, a width of the lower base of a cross-section pattern of the second light-shielding strip 25 in the third direction is $W_0$, where $W_0 = W / COS(a)$; and the width of the lower base of the cross-section pattern of the second light-shielding strip 25 in the third direction is $w_0$, where $w_0 = w / COS(a)$, and accordingly, the width of the lower base of the cross-section pattern of the first light-shielding strip 24 in the third direction is $w_0$, where $w_0 = w / COS(a)$. W is a width of the lower base of the first light-shielding strip 24 or of the second light-shielding strip 25, and w is a width of the upper base of the first light-shielding strip 24 or of the second light-shielding strip 25.

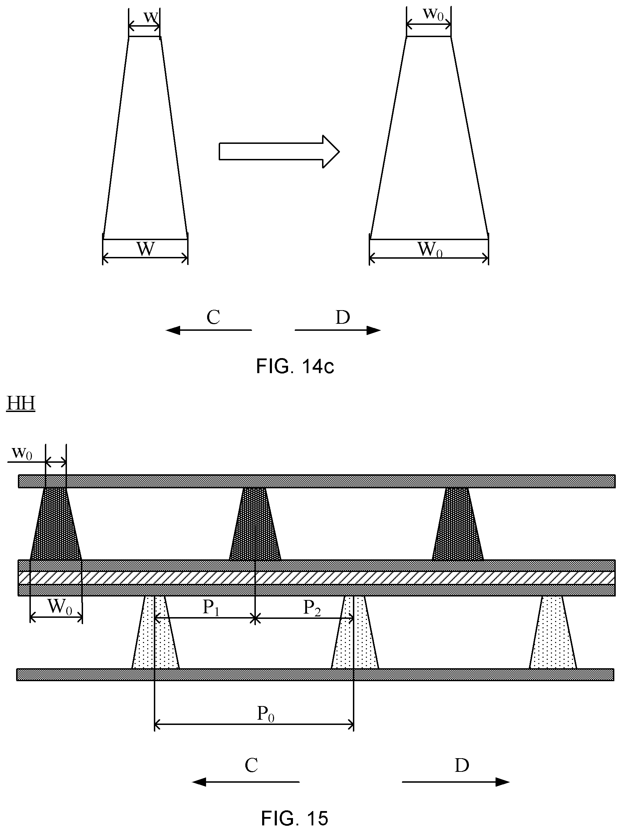

That is, in this case, as shown in FIG. 14c, along the third direction C or the fourth direction D, sectional view patterns of the first light-shielding strip 24 and the second light-shielding strip 25 change, which is equivalent to widths of the upper and lower bases of the sectional view pattern of the light-shielding strip both becoming larger.

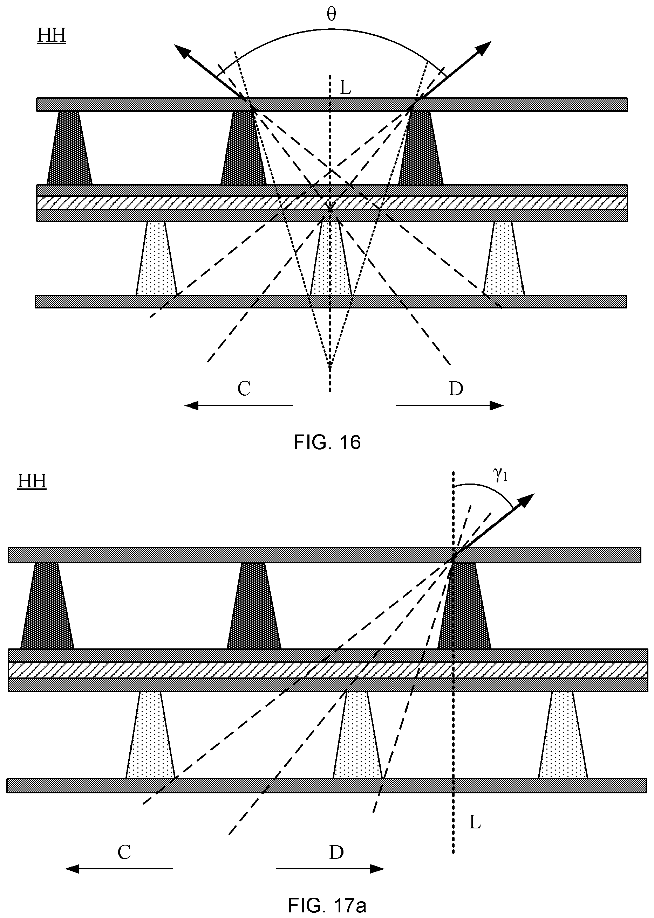

In this case, along the third direction C or fourth direction D, dimensions of the sectional view of the anti-peeping film 2 are shown in FIG. 15. As shown in FIG. 16, a range of the total anti-peeping viewing angle of the anti-peeping film is $\theta$.

As shown in FIG. 17a, a range of an anti-peeping viewing angle $\gamma_1$ of the anti-peeping film 2 in the fourth direction D satisfies the following formula:

$$\gamma 1 = 90° - tan^{-1} \frac{2H + 2h + h1}{P0 + P1 - \frac{W0}{2} - \frac{w0}{2}}.$$

Simplify and obtain:

$$\gamma 1 = 90° - tan^{-1} \frac{2 * \cos a * (2H + 2h + h1)}{2P + 2P1 * \cos \alpha - W - w}.$$

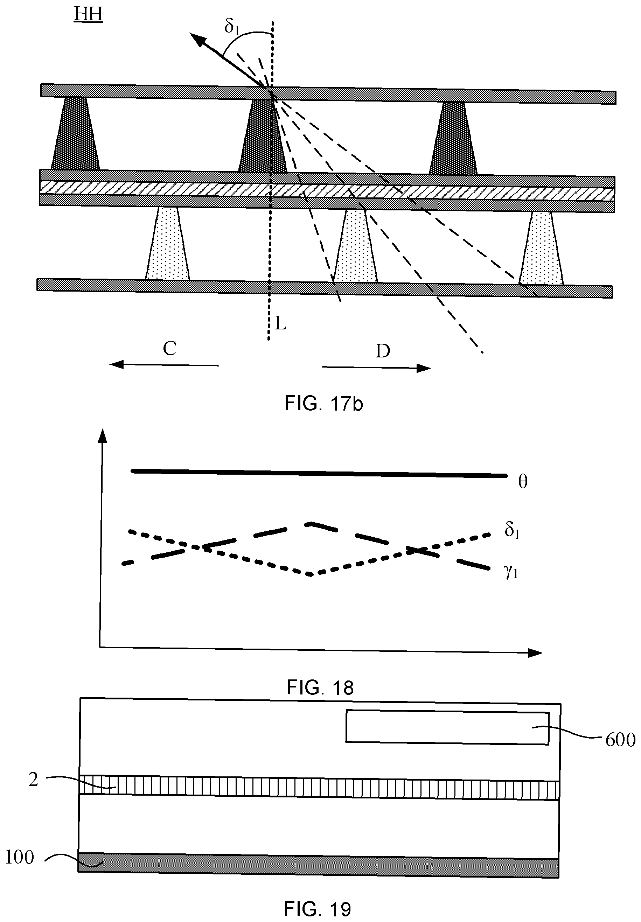

As shown in FIG. 17b, a range of an anti-peeping viewing angle $\delta_1$ of the anti-peeping film 2 in the third direction C satisfies the following formula:

$$\delta 1 = 90° - tan^{-1} \frac{2H + 2h + h1}{P0 + P2 - \frac{W0}{2} - \frac{w0}{2}}.$$

Simplify and obtain:

$$\delta 1 = 90° - tan^{-1}\frac{2 * cos\,a * (2H + 2h + h1)}{2P + 2P2 * cos\,\alpha - W - w}$$

It can be understood that the total anti-peeping viewing angle θ of the anti-peeping film 2 satisfies the formula:

$$\theta = \gamma 1 + \delta 1 \quad,$$

that is,

$$\theta = 180° - tan^{-1}\frac{2 * cos\,a(2H + 2h + h1)}{2P + 2P1 * cos\,a - W - w} - tan^{-1}\frac{2 * cos a(2H + 2h + h1)}{2P + 2P2 * cos\,a - W - w} \quad.$$

As shown in FIG. 14a, $P_1$ and $P_2$ are set periodically along the direction in which the first perpendicular line P extends. Therefore, in a case of $P_1 \neq P_2$, as shown in FIG. 18, where FIG. 18 is a diagram showing the variation of the ranges of the anti-peeping angles of the anti-peeping film 2, there is a difference between the range $\gamma_1$ of the anti-peeping viewing angle of the anti-peeping film 2 in the fourth direction D and the range $\delta_1$ of the anti-peeping viewing angle of the anti-peeping film 2 in the third direction C, but the range θ of the total anti-peeping viewing angle of the anti-peeping film 2 remains unchanged. As can also be seen from FIG. 18, the difference between the range $\gamma_1$ of the anti-peeping viewing angle of the anti-peeping film 2 in the fourth direction D and the range $\delta_1$ of the anti-peeping viewing angle of the anti-peeping film 2 in the third direction C is so small that may be negligible. In a case of $P_1 = P_2$, the range $\gamma_1$ of the anti-peeping viewing angle of the anti-peeping film 2 in the fourth direction D is equal to the range $\delta_1$ of the anti-peeping viewing angle of the anti-peeping film 2 in the third direction C.

As shown in FIG. 15, in a case of $P_1 = P_2$, $P_1 = P_2 = P/(2*cos\alpha)$, and the total range θ of the anti-peeping viewing angle of the anti-peeping film 2 is:

$$\theta = 180° - tan^{-1}\frac{2 * cos\,a(2H + 2hH +)}{2P + 2P1 * cos\,a - W - w} - tan^{-1}\frac{2 * cos a(2H + 2hH +)}{2P + 2P2 * cos\,a - W - w}$$
$$= 2 * \left(90° - tan^{-1}\frac{2 * cos a(2H + 2hH +)}{3P - W - w}\right) \quad.$$

The above total range θ of the anti-peeping viewing angle is less than the following θ' in one implementation addressed above,

$$\theta' = 2\alpha' = 2 * \left(90 - tan^{-1}\frac{2H'}{2P' - W' - w'}\right) \quad.$$

Therefore, compared to the anti-peeping viewing angle θ' in one implementation addressed above, by intersecting both the first direction A and the second direction B with the third direction C in the present embodiment, the anti-peeping viewing angle θ in the present disclosure is smaller in the case where the parameters of the light-shielding strips are the same as those in one implementation addressed above. Therefore, the anti-peeping film 2 in the present disclosure can provide a better anti-peeping function compared to the anti-peeping film in one implementation addressed above.

In addition, by intersecting the first direction A and the second direction B, and both intersecting the third direction C, an occurrence of moiré fringes after light passes through the anti-peeping film 2 may also be avoided.

It will be noted that the moiré fringe phenomenon is a visual phenomenon based on the light-shielding effect and the perceptual properties of human eyes that occurs when the first light-shielding strips 24 and the second light-shielding strips 25 (of the same/similar periodicity) are structurally overlapped and misaligned, resulting in the inclusion of a new, clearly visible pattern of alternating light and dark in the overlapping image.

In some examples, $7\,\mu m \leq w \leq 12\,\mu m$; and/or $13\,\mu m \leq W \leq 19\,\mu m$; and/or $60\,\mu m \leq P \leq 70\,\mu m$; and/or $135\,\mu m \leq H \leq 155\,\mu m$; and/or $170\,\mu m \leq h \leq 190\,\mu m$.

Exemplarily, w=9 μm, W=16 μm, P= 65 μm, H=144 μm, $h_1$=200 μm, and h=180 μm. The anti-peeping film 2 made using the above parameters can be made to satisfy a good anti-peeping effect without increasing the difficulty in making the anti-peeping film 2.

In some embodiments, the included angle between the first direction A and the second direction B is greater than or equal to 15°.

Exemplarily, the included angle between the first direction A and the second direction B may be 15°, 20°, 30°, 40°, 50°, or the like.

By such a setting, the anti-peeping film 2 may be made to achieve a good effect of reducing moiré fringes.

The inventors of the present disclosure have verified whether the above-mentioned included angle between the first direction A and the second direction B can achieve the effect of well avoiding the appearance of moiré fringes.

The verification process is to fix the parameters of the first light-shielding strip 24 and the second light-shielding strip 25, where the parameters include: the distance P between the light-shielding strips, the width W of the lower base of the first light-shielding strip 24 or the second light-shielding strip 25, the width w of the upper base of the first light-shielding strip 24 or the second light-shielding strip 25, and the height of the first light-shielding strip 24 or the second light-shielding strip 25. The adjustment of the included angle between the first direction A and the second direction B is simulated by Light Tools software.

As shown in FIG. 19, which is a simulation interface of Light Tools software, light emitted from the backlight module 100 is directed through the anti-peeping film 2 into a receiving surface 600, and the results received by the receiving surface 600 are compared.

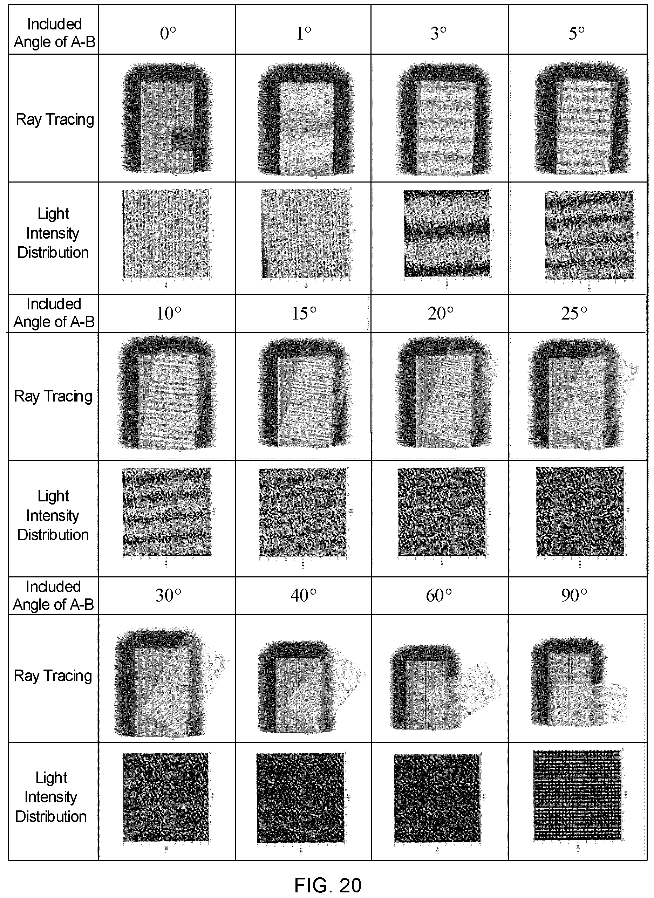

By comparing the results received by the receiving surface 600 in FIG. 20, in a case of the included angle between the first direction A and the second direction B being greater than or equal to 15°, no visible moiré fringes can be seen anymore.

In some embodiments, the connection layer 22 has a haze.

For example, at least one of the third protective layer 221, the second adhesive layer 222, and the fourth protective layer 223 has a haze.

For example, the second adhesive layer 222 is made of an optically clear adhesive with 25% haze.

By making the connection layer 22 have a haze, the connection layer 22 can diffuse the light incident thereto and disrupt the light-shielding effect due to the repetitiveness of the moiré fringes, and thus, an effect of reducing the moiré fringes can be achieved.

In some examples, the second protective layer 23 has a haze.

Exemplarily, the way to make the second protective layer 23 have a haze may be to treat a surface of the second protective layer 23.

By making the second protective layer 23 have a haze, the second protective layer 23 can diffuse the light incident thereto and disrupt the light-shielding effect due to the repetitiveness of the moiré fringes, and thus, an effect of reducing the moiré fringes can be achieved.

In some examples, the backlight module 100 further includes a polarizer provided on the second light exit surface 3A of the second light guide plate 3, the polarizer having a haze.

For example, the polarizer is a polarizer with 25% haze.

By making the polarizer have a haze, the polarizer can diffuse the light incident thereto and disrupt the light-shielding effect due to the repetitiveness of the moiré fringes, and thus, an effect of reducing the moiré fringes can be achieved.

It can be understood that the effect of reducing the moiré fringes can be achieved by intersecting both the first direction A and the second direction B with the third direction C, or by making the connection layer 22 with a haze, or by making the second protective layer 23 with a haze, or by making the polarizer with a haze. By combining the anti-peeping film 2 with the above-described film layer with haze, a better effect of reducing the moiré fringes can be achieved while realizing narrow viewing angle anti-peeping.

Exemplarily, in the anti-peeping film 2, the first direction A and the second direction B both intersect the third direction C, and the polarizer with 25% haze is provided in the backlight module 100, and measured data of the range of the anti-peeping angle is shown in Table 2 below.

Table 2

| Item | The anti-peeping film (with the included angle between the first direction A and the second direction B being 30°) and the polarizer with 25% haze in the present disclosure | The anti-peeping film and the polarizer with 25% haze in one implementation |
|---|---|---|
| Light transmittance at 45° viewing angle under anti-peeping display function | 0.6% to 1.2% | 1.6% |

As can be seen from Table 2, the light transmittance of the anti-peeping film in the present disclosure at 45° viewing angle under the anti-peeping display function is less than the light transmittance of the anti-peeping film under the anti-peeping display function in one implementation addressed above, and thus the backlight module of the present disclosure can reduce the generation of moiré fringes while ensuring a better anti-peeping function. Moreover, the production process of the anti-peeping film of the present disclosure is simpler, thereby realizing a better anti-peeping function and reducing the generation of moiré fringes without increasing the difficulty of the process.

The foregoing description is only specific embodiments of the present disclosure, but the scope of protection of the present disclosure is not limited thereto. Any changes or replacements that a person skilled in the art could conceive of within the technical scope of the present disclosure shall be included in the protection scope of the present disclosure. Therefore, the protection scope of the present disclosure shall be subject to the protection scope of the claims.

**Claims**

1.   A backlight module, comprising:

a first light guide plate having a first light exit surface and a first light incident surface intersecting the first light exit surface;
an anti-peeping film located on a side of the first light exit surface of the first light guide plate;
a second light guide plate located on a side of the anti-peeping film away from the first light guide plate, the second light guide plate having a second light exit surface away from the anti-peeping film and a second light incident surface intersecting the second light exit surface, wherein the second light incident surface and the first light incident surface are located at a same side of the first light guide plate; and
a first light source and a second light source that are arranged along a direction perpendicular to a reference plane, the first light source being opposite the first light incident surface;
wherein the second light source includes a first portion, the first portion extending along the direction perpendicular to the reference plane and being opposite the second light incident surface;
a side of the first light source proximate to the first light guide plate is staggered from a side of the second light source proximate to the second light guide plate, and the side of the first light source proximate to the first light guide plate is closer to a center of the first light guide plate than the second light source; and
the reference plane is a plane where the first light exit surface is located.

2.   The backlight module according to claim 1, wherein the second light source includes a second portion connected to the first portion, the second portion of the second light source being opposite the first light incident surface; and the first light source is located between the first light incident surface and the second portion of the second light source.

3.   The backlight module according to claim 1 or 2, further comprising a light-shielding component, wherein

in the direction perpendicular to the reference plane, the light-shielding component is located between the first light source and the second light guide plate; and
an orthographic projection of the light-shielding component on the reference plane covers an orthographic projection of at least a portion of the first light source on the reference plane.

4.   The backlight module according to claim 3, wherein in a direction parallel to the reference plane, the light-shielding component extends to a space between the first light guide plate and the second light guide plate; and
the second light incident surface extends beyond the first light incident surface.

5. The backlight module according to claim 3 or 4, wherein a partial boundary, away from the second light source, of a boundary of the orthographic projection of the light-shielding component on the reference plane, and a partial boundary, away from the second light source, of a boundary of an orthographic projection of the first light source on the reference plane have a distance therebetween, and the distance is greater than or equal to 3.5 mm.

6. The backlight module according to any one of claims 3 to 5, further comprising:

   a light adjustment layer located between the anti-peeping film and the first light guide plate, the light adjustment layer including a third portion extending to a top of the first light source; and
   a first light-shielding layer located on a surface of the third portion of the light adjustment layer on a side, wherein the first light-shielding layer and the third portion of the light adjustment layer form the light-shielding component.

7. The backlight module according to claim 6, wherein the light adjustment layer includes:

   a diffusion sheet located between the anti-peeping film and the first light guide plate; and
   a prism layer located between the anti-peeping film and the diffusion sheet;

   wherein a portion of the diffusion sheet extending to the top of the first light source forms the third portion, and the first light-shielding layer is located on a side of the diffusion sheet proximate to the first light guide plate.

8. The backlight module according to claim 6 or 7, wherein the third portion of the light adjustment layer and the second portion of the second light source have a gap therebetween.

9. The backlight module according to any one of claims 6 to 8, wherein the first light source includes: a first light-emitting device and a first substrate arranged sequentially along a direction away from the first light incident surface, an extension direction of the first substrate being perpendicular or substantially perpendicular to the reference plane; and the orthographic projection of the light-shielding component on the reference plane covers an orthographic projection of the first light-emitting device on the reference plane, and an orthographic projection of a portion of the first substrate on the reference plane.

10. The backlight module according to claim 9, further comprising a first adhesive layer provided between the first substrate and the second portion of the second light source;
    wherein the first light source is fixed on the second portion of the second light source through the first adhesive layer.

11. The backlight module according to any one of claims 5 to 10, wherein the second light guide plate further has a second non-light incident surface intersecting the second light exit surface, and the second non-light incident surface and the second light incident surface surround the second light exit surface; and
    the backlight module further comprises:

    a back plate having an installation depression, wherein the first light guide plate, the anti-peeping film, the light adjustment layer, the second light guide plate, the first light source, and the second light source are located within the installation depression; and
    a plastic frame fastened to the back plate and including a first bending edge, wherein the first bending edge is located at a top of the back plate;
    wherein an orthographic projection of the first bending edge on the reference plane, covers an orthographic projection of an edge portion, corresponding to the first non-light incident surface, of the second light guide plate, an orthographic projection of an edge portion, corresponding to the first non-light incident surface, of the anti-peeping film, and an orthographic projection of an edge portion, corresponding to the first non-light incident surface, of the light adjustment layer.

12. The backlight module according to any one of claims 3 to 5, further comprising a fixing component connected to the light-shielding component, wherein
    the fixing component is located between the first light source and the second portion of the second light source.

13. The backlight module according to claim 12, wherein the orthographic projection of the light-shielding component on the reference plane covers an orthographic projection of the first light source on the reference plane; and
    the fixing component is connected to a side surface of the light-shielding component proximate to the second light source, and a cross-section pattern of the light-shielding component and the fixing component is L-shaped.

14. The backlight module according to claim 12 or 13, wherein the second light guide plate further has a second non-light incident surface and a bottom surface, wherein the second non-light incident surface intersects the second light exit surface, the bottom surface faces away from the second light exit surface, and the second non-light incident surface is perpendicular to the second light exit surface; and
the backlight module further comprises: a second light-shielding layer covering the second non-light incident surface, and a third light-shielding layer covering a portion of the bottom surface proximate to the second non-light incident surface, the third light-shielding layer being connected to the second light-shielding layer.

15. The backlight module according to claim 12 or 13, wherein the second light guide plate further has a second non-light incident surface and a bottom surface, wherein the second non-light incident surface intersects the bottom surface, the bottom surface faces away from the second light exit surface, and the second non-light incident surface and the bottom surface have an included angle being an obtuse angle; and
the backlight module further comprises a fourth light-shielding layer covering the second non-light incident surface.

16. The backlight module according to any one of claims 3 to 5, further comprising a mid-frame, the mid-frame including a bottom frame, wherein

the bottom frame is located between the anti-peeping film and the second light guide plate, and is configured to carry the second light guide plate; and
the bottom frame includes a first bottom plate at a same side as the first light source, wherein
the first bottom plate extends to a top of the first light source; and an orthographic projection of the first bottom plate on the reference plane covers the orthographic projection of the at least a portion of the first light source on the reference plane, and the first bottom plate forms the light-shielding component.

17. The backlight module according to claim 16, wherein a portion, used to carry the second light guide plate, of the first bottom plate is higher than a portion, located on the top of the first light source, of the first bottom plate; and a cross-section pattern of the first bottom plate is step-shaped.

18. The backlight module according to claim 16 or 17, wherein the first light source includes: a first light-emitting device and a first substrate arranged sequentially along a direction away from the first light incident surface, an extension direction of the first substrate being perpendicular or substantially perpendicular to the reference plane; and
a top of the first substrate is higher than the first light exit surface; and a portion, located on the top of the first light source, of the first bottom plate is located on the top of the first substrate and contact with the first substrate.

19. The backlight module according to any one of claims 16 to 18, further comprising:
a back plate, the back plate including a second bottom plate and multiple side plates fixed around the second bottom plate, wherein the second bottom plate and the multiple side plates define an installation depression, and the first light guide plate, the anti-peeping film, the first light source, and the second light source are located within the installation depression.

20. The backlight module according to claim 19, wherein

the second light guide plate further has a second non-light incident surface intersecting the second light exit surface, the second non-light incident surface and the second light incident surface surround the second light exit surface, and the second non-light incident surface is perpendicular to the second light exit surface;
the bottom frame further includes a third bottom plate corresponding to the second non-light incident surface, the first bottom plate and the third bottom plate are connected and define an opening, and the opening exposes a portion of the anti-peeping film;
the multiple side plates include a first side plate and a second side plate, the first side plate being opposite the first light incident surface; and
the bottom frame is located on the second side plate, and the third bottom plate abuts against the second side plate.

21. The backlight module according to claim 20, wherein the mid-frame further includes a side frame located on the third bottom plate, the side frame being opposite the second non-light incident surface; and
an orthographic projection of the second light guide plate on the reference plane is closer to an orthographic projection of the side frame on the reference plane than an orthographic projection of the first light guide plate on the reference plane.

22. The backlight module according to any one of claims 1 to 21, wherein the second light guide plate further has a first non-light incident surface intersecting the second light exit surface, the first non-light incident surface and the second light incident surface surrounding the second light exit surface;
the backlight module further comprises:

a back plate having an installation depression, the first light guide plate, the anti-peeping film, the first light source, and the second light source being located within the installation depression; and
a plastic frame fastened to the back plate, the plastic frame including a first bending edge and a second bending edge;
wherein the first bending edge is located at a top of the back plate; an orthographic projection of the first bending edge on the reference plane covers an orthographic projection of a portion, proximate to the first non-light incident surface, of the second light guide plate on the reference plane; and a width of the first bending edge is $W_1$, 3 mm $\leq$ $W_1 \leq$ 8 mm;
the second bending edge is located at the top of the back plate; an orthographic projection of the second bending edge on the reference plane covers an orthographic projection of a portion, proximate to the second light incident surface, of the second light guide plate on the reference plane; and a width of the second bending edge is $W_2$, 10 mm $\leq W_2 \leq$ 17 mm; and
the reference plane is the plane where the first light exit surface is located.

23. The backlight module according to any one of claims 1 to 22, wherein the anti-peeping film includes:

a first protective layer, a connection layer and a second protective layer that are sequentially stacked along the direction perpendicular to the reference plane;
a plurality of first light-shielding strips, located between the first protective layer and the connection layer and extending along a first direction; and
a plurality of second light-shielding strips, located between the connection layer and the second protective layer and extending along a second direction;
wherein the first direction and the second direction are both parallel to the reference plane; and the first direction is the same as the second direction, or the first direction intersects the second direction; and
the reference plane is the plane where the first light exit surface is located.

24. The backlight module according to claim 23, wherein the first light-shielding strips and the second light-shielding strips each have a cross-section in a shape of a trapezoid.

25. The backlight module according to claim 24, wherein the first direction intersects the second direction;

the anti-peeping film has anti-peeping directions being a third direction and a fourth direction, the third direction being opposite the fourth direction; and the first direction and the second direction both intersect the third direction;
the connection layer includes: a third protective layer, a second adhesive layer and a fourth protective layer that are sequentially stacked along the direction perpendicular to the reference plane;
an anti-peeping viewing angle of the anti-peeping film in the fourth direction satisfies a formula:

$$\gamma 1 = 90° - tan^{-1}\frac{2 * cos\, a * (2H + 2h + h1)}{2P + 2P1 * cos\, \alpha - W - w},$$

and
an anti-peeping viewing angle of the anti-peeping film in the third direction satisfies a formula:

$$\delta 1 = 90° - tan^{-1}\frac{2 * cos\, a * (2H + 2h + h1)}{2P + 2P2 * cos\, \alpha - W - w},$$

wherein $\gamma_1$ is the anti-peeping viewing angle of the anti-peeping film in the fourth direction; $\delta_1$ is the anti-peeping viewing angle of the anti-peeping film in the third direction; H is a height of the first light-shielding strip or of the second light-shielding strip; h is a thickness of the third protective layer or of the fourth protective layer; $h_1$ is a

thickness of the second adhesive layer; $\alpha$ is a complementary angle of an included angle between the first direction and the third direction, and is a complementary angle of an included angle between the second direction and the third direction; P is a minimum distance between centers of cross-sections of two adjacent first light-shielding strips, and is a minimum distance between centers of cross-sections of two adjacent second light-shielding strips; W is a width of a lower base of the cross-section of the first light-shielding strip or of the cross-section of the second light-shielding strip; and w is a width of an upper base of the cross-section of the first light-shielding strip or of the cross-section of the second light-shielding strip; and

$P_1$ and $P_2$ are both a distance between a center of the cross-section of the second light-shielding strip and a center of the cross-section of the first light-shielding strip adjacent along the third direction; and a sum of $P_1$ and $P_2$ is a distance, in the third direction, between the centers of the cross-sections of the two adjacent first light-shielding strips, and is a distance, in the fourth direction, between the centers of the cross-sections of the two adjacent second light-shielding strips.

26. The backlight module according to claim 25, wherein an included angle between the first direction and the second direction is greater than or equal to 15°.

27. The backlight module according to claim 24, wherein the first direction is the same as the second direction; and orthographic projections of the first light-shielding strips on the reference plane overlap orthographic projections of the second light-shielding strips on the reference plane;

the connection layer includes: a third protective layer, a second adhesive layer and a fourth protective layer that are sequentially stacked along the direction perpendicular to the reference plane;
an anti-peeping viewing angle of the anti-peeping film satisfies a formula:

$$\theta = 2 * \left( 90° - tan^{-1} \frac{4H + 4h + 2h1}{2P - W - w} \right),$$

wherein $\theta$ is the anti-peeping viewing angle; H is a height of the first light-shielding strip or of the second light-shielding strip; h is a thickness of the third protective layer or of the fourth protective layer; $h_1$ is a thickness of the second adhesive layer; P is a distance between centers of cross-sections of two adjacent first light-shielding strips, and is a distance between centers of cross-sections of two adjacent second light-shielding strips; W is a width of a lower base of the cross-section of the first light-shielding strip or of the cross-section of the second light-shielding strip; and w is a width of an upper base of the cross-section of the first light-shielding strip or of the cross-section of the second light-shielding strip.

28. The backlight module according to any one of claims 25 to 27, wherein

$7 \ \mu m \leq w \leq 12 \ \mu m$; and/or
$13 \ \mu m \leq W \leq 19 \ \mu m$; and/or
$60 \ \mu m \leq P \leq 70 \ \mu m$; and/or
$135 \ \mu m \leq H \leq 155 \ \mu m$; and/or
$170 \ \mu m \leq h \leq 190 \ \mu m$.

29. The backlight module according to any one of claims 23 to 28, wherein

the connection layer has haze; and/or
the second protective layer has haze; and/or
the backlight module further comprises a polarizer provided on the second light exit surface of the second light guide plate, the polarizer having haze.

30. The backlight module according to any one of claims 1 to 29, wherein the first light guide plate includes a plurality of strip-shaped protruding structures located on the first light exit surface, the plurality of strip-shaped protruding structures extending along a direction perpendicular to the first light incident surface.

31. The backlight module according to any one of claims 1 to 30, wherein a thickness of the first light guide plate is $h_2$, a thickness of the second light guide plate is $h_3$, and $h_2$ and $h_3$ satisfy:

$$0.5 < \frac{h3}{h2} < 1$$

.

32. The backlight module according to any one of claims 1 to 31, further comprising:
a back plate having an installation depression, the first light guide plate, the anti-peeping film, the light adjustment layer, the first light source, and the second light source being located within the installation depression, wherein

the back plate further has a first through hole and a second through hole;
the backlight module further comprises a first power supply line and a second power supply line;
wherein the first power supply line passes through the first through hole and is electrically connected to the first light source; and the second power supply line passes through the second through hole and is electrically connected to the second light source.

33. A display device, comprising:

the backlight module according to any one of claims 1 to 32; and
a display panel located on a side, away from the first light guide plate, of the second light guide plate in the backlight module.

1000

FIG. 1

1000

200

100

FIG. 2

FIG. 3a

FIG. 3b

FIG. 4a

FIG. 4b

FIG. 5

FIG. 6

FIG. 7a

FIG. 7b

FIG. 8a

FIG. 8b

FIG. 9

1000

200

500

201(20)

902(90)

9012(901)

2

102b(102)

101(10)

3C

3A

$L_8$

9011(901)

3

1

400

1A 3B 1B

41 42 300

4

5

7

102a

FIG. 10

9012(901)

9011(901)

102a

FIG. 11a

FIG. 11b

FIG. 11c

FIG. 11d

FIG. 11e

FIG. 11f

EE

902(90)

9012(901)

102b-1

102b

FIG. 11g

1'

F  F

FIG. 12a

EP 4 564 084 A1

FIG. 12b

FIG. 13a

44

FIG. 13b

FIG. 13c

2

P

H ⟶                                                                    ⟵ H

$P_1$        $P_2$

α        α

P

$P_0$

25

24

A        B        P        C        D

FIG. 14a

P

W        w

$W_0$        $W_0$

α        α

24        25

A        B        C        D

FIG. 14b

W

$W_0$

W

$W_0$

C

D

FIG. 14c

HH

$w_0$

$W_0$

$P_1$

$P_2$

$P_0$

C

D

FIG. 15

HH

θ

L

C

D

FIG. 16

HH

$\gamma_1$

L

C

D

FIG. 17a

HH

δ₁

L

C          D

FIG. 17b

θ

δ₁

γ₁

FIG. 18

2

600

100

FIG. 19

| Included Angle of A-B | 0° | 1° | 3° | 5° |
|---|---|---|---|---|
| Ray Tracing | | | | |
| Light Intensity Distribution | | | | |

| Included Angle of A-B | 10° | 15° | 20° | 25° |
|---|---|---|---|---|
| Ray Tracing | | | | |
| Light Intensity Distribution | | | | |

| Included Angle of A-B | 30° | 40° | 60° | 90° |
|---|---|---|---|---|
| Ray Tracing | | | | |
| Light Intensity Distribution | | | | |

FIG. 20

## INTERNATIONAL SEARCH REPORT

| International application No. |
| --- |
| **PCT/CN2022/121095** |

| A. | CLASSIFICATION OF SUBJECT MATTER |
| --- | --- |

G02F1/13357(2006.01)i; G02B6/00(2006.01)i

According to International Patent Classification (IPC) or to both national classification and IPC

| B. | FIELDS SEARCHED |
| --- | --- |

Minimum documentation searched (classification system followed by classification symbols)

  IPC: G02F, G02B

Documentation searched other than minimum documentation to the extent that such documents are included in the fields searched

Electronic data base consulted during the international search (name of data base and, where practicable, search terms used)

  CNABS; CNTXT; VEN; DWPI; USTXT; JPTXT; WOTXT; EPTXT; CNKI; IEEE; ISI: 背光, 两, 双, 第二, 第2, 多, 导光, 光导, 光源, 发光, LED, 交错, 错位, 防窥膜, 防窥片; backlight, two, second, double, LGP, light guide plate, light source, interlace, intersect, privacy film, privacy screen

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 1501142 A (SAMSUNG ELECTRONICS CO., LTD.) 02 June 2004 (2004-06-02)<br>description, page 5, line 24 to page 8, line 14, and figure 4-figure 6 | 1-33 |
| Y | CN 206057756 U (SHANGHAI TIANMA MICROELECTRONICS CO., LTD. et al.) 29 March 2017 (2017-03-29)<br>description, paragraphs [0028]-[0044], and figure 1-figure 11 | 1-33 |
| Y | CN 113138492 A (HUAWEI TECHNOLOGIES CO., LTD.) 20 July 2021 (2021-07-20)<br>description, paragraphs [0056]-[0108], and figure 1-figure 18 | 1-33 |
| Y | WO 2022127444 A1 (MAANSHAN JINGZHI TECHNOLOGY CO., LTD.) 23 June 2022 (2022-06-23)<br>description, page 5, paragraph 5 to page 10, paragraph 2, and figure 1-figure 19 | 1-33 |
| A | CN 106023801 A (BOE TECHNOLOGY GROUP CO., LTD.) 12 October 2016 (2016-10-12)<br>entire document | 1-33 |
| A | JP 2003222863 A (OPTREX K. K.) 08 August 2003 (2003-08-08)<br>entire document | 1-33 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 May 2023** | **05 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/121095**

| Patent document cited in search report | | | Publication date (day/month/year) | Patent family member(s) | | | Publication date (day/month/year) |
|---|---|---|---|---|---|---|---|
| CN | 1501142 | A | 02 June 2004 | US | 2004135936 | A1 | 15 July 2004 |
| | | | | US | 7154570 | B2 | 26 December 2006 |
| | | | | JP | 2004118207 | A | 15 April 2004 |
| | | | | JP | 3962865 | B2 | 22 August 2007 |
| | | | | TW | 200424607 | A | 16 November 2004 |
| | | | | TWI | 259924 | B | 11 August 2006 |
| CN | 206057756 | U | 29 March 2017 | None | | | |
| CN | 113138492 | A | 20 July 2021 | None | | | |
| WO | 2022127444 | A1 | 23 June 2022 | CN | 112882286 | A | 01 June 2021 |
| | | | | CN | 214375703 | U | 08 October 2021 |
| CN | 106023801 | A | 12 October 2016 | CN | 106023801 | B | 12 February 2019 |
| JP | 2003222863 | A | 08 August 2003 | None | | | |

Form PCT/ISA/210 (patent family annex) (July 2022)